# EUROPEAN PATENT APPLICATION

(11) **EP 3 837 988 A1**
(43) Date of publication of application: **23.06.2021**
(21) Application number: 19218535.3
(22) Date of filing: 20.12.2019
(51) Int. Cl.: A23G 1/00, A23G 1/02, A23G 1/06

(54) **IMPROVED COCOA BEAN QUALITY BY ENHANCED FERMENTATION TECHNOLOGY**

(71) Applicant: Eskes, Albertus Bernardus, 22420-020 Rio de Janeiro (BR); Ahnert, Dario, 45650-000 Illhéus (BR); Pujol, David, 45654-272 Ilheus (BR)
(72) Inventor: Ahnert, Dario, 45650-000 Illhéus (BR); Eskes, Albertus Bernardus, 22420-020 Rio de Janeiro (BR); Pujol, David, 45654-272 ILHEUS (BR)
(74) Representative: Vos, Derk

(57) **Abstract**

The present application relates to a method for processing cocoa beans, wherein the method comprises the steps of providing at least one cocoa pod; separating cocoa beans and cocoa pulp from the at least one cocoa pod, thereby providing a fresh mixture of cocoa beans and cocoa pulp; draining off cocoa honey from the fresh mixture of cocoa beans and cocoa pulp, the step including a perforation of the fresh mixture prior to, at the initiation and/or during draining, thereby providing a drained mixture; optionally inoculating the drained mixture with a cocoa honey-based inoculant, thereby providing an optionally inoculated mixture; fermenting the drained mixture or, if step (iv) is present, the optionally inoculated mixture in a permeable fermentation container exhibiting openings at least in the bottom, the step optionally including a perforation of the drained mixture or, if step (iv) is present, the optionally inoculated mixture prior to, at the initiation and/or during fermentation, thereby providing fermented cocoa beans; and drying and/or roasting the fermented cocoa beans. Furthermore, the present application also relates to cocoa beans obtained according to said method and the use of such cocoa beans for the preparation of chocolate and other cocoa-based products.

## Description

### BACKGROUND OF THE INVENTION

### Field of the invention

The present application relates to a method for processing cocoa beans, cocoa beans obtained by said method, and the use of such cocoa beans for the preparation of chocolate and other cocoa-based products.

### Background of the invention

Fermented and dried cocoa beans are raw materials for the production of chocolate and other cocoa-based products. Since unfermented cocoa beans typically have strong acidic, bitter and astringent flavors, during fermentation it is aimed to gradually reduce the intensity of these undesired flavors (also referred to as "unpleasant flavors").The manufacturing of edible cocoa beans encompasses multiple steps crucial for the expression of the beans' individual flavor profile, based on its geographical origin, the climate and on the cocoa cultivar. Particularly during fermentation, cocoa flavor precursors develop which undergo chemical reactions, such as the Maillard reaction, in the following drying and roasting processes, eventually unfolding the typical cocoa flavor. Fruity flavors and aromas depend on the fresh fruit pulp flavors and odors.

There are different methods to ferment cocoa beans known in the art, e.g. by piling up fresh beans in heaps that are generally placed on banana leaves on the ground and covered with banana leaves, or by placing fresh beans in baskets, bags or wooden boxes ("sweat boxes") of variable sizes.

The fermentation process typically consists of bringing together an amount of fresh cocoa beans surrounded by mucilage, sufficiently large to induce, through the activity of microorganisms (mainly yeasts, lactic acid bacteria and acetic acid bacteria), a chain of biochemical reactions within the mucilage and inside the cocoa beans, which is necessary to obtain cocoa beans of satisfactory commercial quality.

In a generic sense, the quality of cocoa beans is categorized under the two broad terms "fine cocoa" or "flavor cocoa", and "bulk cocoa" or "ordinary cocoa". Fine cocoa beans are highly sought-after due to their less presence of undesired flavors such as acidity, bitterness and astringency and higher presence of pleasant aromatic profile based on enhanced complex aromas and flavors (e.g. fruity and floral). These may be used as primary products for the manufacturing of dark chocolates, for making blends with cocoa from other origins to create diverse or complex flavor profiles, or for the manufacturing of other cocoa-based high quality food products. Countries with high share of total exports of classified fine cocoa beans are Bolivia, Costa Rica, Dominican Republic, Grenada, Madagascar, Mexico, Nicaragua, Saint Lucia, Trinidad and Tobago, and Venezuela.

Fine cocoa beans makeup less than5 %in the worldwide cocoa production. The main traditional genetic sources for fine cocoa are the cultivars Trinitario, Nacional (although considered to be a Forastero-type cultivar) and Criollo. In contrast, Forastero cocoa varieties, such as Amelonado and CCN51, make up the largest proportion in the worldwide cocoa production, therefore also called "bulk cocoa beans". Despite their strong acidic, bitter and/or astringent flavors with lack of aromatic finesse, bulk cocoa beans still prevail in the global cocoa market, which is not least due to their good yields and less susceptibility to plant pests and diseases.

Furthermore, prior art cocoa bean fermentation is still a spontaneous on-farm process and usually leads to products of fluctuating quality. The variations may depend on a series of factors including country, farm, pod ripeness, post-harvest, pod age and storage, pod diseases, type of cocoa cultivar, variations in pulp/bean ratio, sugar content of the pulp, the fermentation method, size of the batch, season and weather conditions, the turning frequency and the fermentation time, which makes reproducibility of fermentation particularly difficult. Due to the uncontrolled nature of the usual fermentation process, the quality of the finished cocoa beans is variable (WO2013/025621A1).

Accordingly, one approach is to address the unmasking of undesired flavors during the final stages of the chocolate production, by the addition of sugar, milk and/or aromatic ingredients (e.g. vanilla or pieces of dried fruits).

WO 2003/037099 A2 discloses a process for manipulating the flavor of chocolate through the addition of a non-cocoa/dairy flavor attribute to the chocolate mass.

WO 2007/063563 A1 describes the addition of dehydrated fruit to chocolate to give a particular flavor and taste.

Another approach is to improve the quality of the cocoa beans during the fermentation process. There are several fermentation processes of cocoa beans in the art that aim at decreasing undesirable flavors.

EP 0 442 421 A2 discloses an improved cocoa fermentation process comprising the treatment of fresh cocoa beans before fermentation in order to remove up to 80 weight-% of pulp based on the original weight of the pulp.

GB 2 059 243 A discloses a process for the fermentation of cocoa beans based on a rigorous control of fermentation parameters such as pH value and temperature.

WO 2009/103137 A2 discloses the development of desirable flavors, such as fruity and floral flavors next to typical cocoa flavor, in cocoa beans by the addition of aromatic substances.

Another common approach is to subject cocoa-based products to alkalization, e.g. by alkaline carbonates, in order to reduce the undesired flavors, such as acidity. However, the so-called "Dutching" process is known to decrease also the content of desirable flavors and aromas as well as of polyphenols in treated cocoa-based products.

Accordingly, the prior art methods lack a process for preparing cocoa beans with both an overall good and consistent physical appearance along with a highly desirable aromatic profile without the addition of often time-consumingly processed, unhealthy, costly and/or uneconomic aromatic ingredients (e.g. alkaline carbonate, sugar, fruit pieces) or microorganisms laboriously isolated, e.g. in often distant biological laboratories. There is thus still a substantial need for simple and clean methods for preparing cocoa beans in a consistent manner with low or no intensities of undesired flavors (i.e. acidity, bitterness and astringency),significantly developed fine flavor intensities (e.g. sweet, honey, almond), and enhanced intensities of desirable flavors inherent in certain cocoa varieties (fruity flavor, and floral and spicy aromas).

### SUMMARY OF THE INVENTION

It is thus one object of the present disclosure to provide a method for processing cocoa beans consistently with reduced intensities of undesired flavors, i.e. acidic, bitter and astringent flavor, and enhanced intensities of desired flavors and aromas, i.e. fruity, spicy, floral, sweet and almond flavor or aroma, which may be used in the preparation of high quality chocolate and further cocoa-based specialty products.

In a first aspect, the present disclosure provides a method for processing cocoa beans as disclosed in claim 1.

In a second aspect, the present disclosure provides cocoa beans obtained or obtainable according to a method of the first aspect.

In a third aspect, the present disclosure provides a product comprising at least one cocoa bean or a part of a cocoa bean according to the first and second aspects.

In a fourth aspect, the present disclosure provides a process for preparing chocolate and/or cocoa products from cocoa beans according to the third aspect.

In a fifth aspect, the present disclosure provides a chocolate and/or cocoa product manufactured according to the fourth aspect.

The present invention as illustratively described in the following may suitably be practiced in the absence of any element or elements, limitation or limitations not specifically disclosed herein.

The present invention will be described with respect to particular embodiments and with reference to certain examples, but the invention is not limited thereto, and it is only defined by the appending claims.

### DETAILED DESCRIPTION OF THE INVENTION

The present disclosure relates to a method for the preparation of cocoa beans, wherein the method comprises the steps of
(i) providing at least one cocoa pod;
(ii) separating cocoa beans and cocoa pulp from the at least one cocoa pod, thereby providing a fresh mixture of cocoa beans and cocoa pulp;
(iii) draining off cocoa honey from the fresh mixture of cocoa beans and cocoa pulp, the step including a perforation of the fresh mixture prior to, at the initiation and/or during draining, thereby providing a drained mixture;
(iv) optionally inoculating the drained mixture with a cocoa honey-based inoculant, thereby providing an optionally inoculated mixture;
(v) fermenting the drained mixture or, if step (iv) is present, the optionally inoculated mixture in a permeable fermentation container exhibiting openings at least in the bottom, the step optionally including a perforation of the drained mixture or, if step (iv) is present, the optionally inoculated mixture prior to, at the initiation and/or during fermentation, thereby providing fermented cocoa beans; and
(vi) drying and/or roasting the fermented cocoa beans.

The at least one cocoa pod may preferably be provided by one of any cocoa cultivar of *Theobroma cacao L.,* a mixture of at least two, or a hybrid of at least two of any cocoa cultivar of *Theobroma cacao L.,* that is cultivated in any cocoa producing country (e.g. Ivory Coast, Ghana, Cameroon, Nigeria, Madagascar, Brazil, Ecuador, Venezuela, Dominican Republic, Trinidad and Tobago, Indonesia, Papua New Guinea and/or Malaysia).

Any cocoa bean cultivar can be used for the fermentation method according to the present disclosure. However, for economic reasons, it is preferred to enhance the aromatic qualities of bulk cocoa beans which are usually sold at cocoa markets for lower prices than beans from fine flavored cocoa varieties and which are usually subjected to the Dutching process in order to reduce typical undesirable flavors of such bulk cocoa beans. "Bulk cocoa beans" are cocoa beans that generally express no or insignificant levels of fine flavor and/or aroma, such as fruity flavors and floral/spicy aromas. Several cocoa origins are associated with occurrence of undesirable flavors (i.e. acidity, astringency and bitterness) due to the inherent traits of the cocoa cultivar or due to inadequate post-harvesting processing. The most commonly grown bulk cocoas are traditional "Forastero" cocoa varieties, such as Amelonado varieties, modern hybrid cocoa varieties or cocoa types derived from these varieties. "Forastero" varieties make up the majority of the cocoa varieties grown worldwide.

Fine flavored cocoa varieties may also be used in the fermentation process according to the present invention. Among the genetic cocoa origins that are related to fine flavors, or known to possess special aromas, are traditional cocoa varieties, such as Criollo, Trinitario and Nacional. However, some of the less commonly grown Forastero types may also produce fine-flavor cocoa (such as is the case for the Peruvian "Chuncho" type).

In one embodiment, the cocoa cultivar is selected from the group consisting of the ten classes of genetic clusters according to Motamayor et al. (J.C. Motamayor et al. (2008) Geographic and Genetic Population Differentiation of the Amazonian Chocolate Tree (Theobroma cacao L.)PLoS ONE 3(10): e3311. doi:10.1371/journal.pone.0003311), namely "Amelonado", "Contamana", "Criollo", "Curaray", "Guiana", "Iquitos", "Marañon", "Nacional", "Nanay" and "Purús", further genetic clusters comprising native cocoas from the "Beni/Madre de Dios/Urubamba" river valleys, "Yavari/Jarua" river valleys, and "Putumayo/Caqueta" river valleys, or a hybrid of at least two of the genetic clusters.

In a more preferred embodiment, the cocoa cultivar isselected from the group consisting of the genetic clusters"Amelonado", "Contamana", "Curaray", "Guiana", "Iquitos", "Marañon", "Nacional", "Nanay" and "Purús",further genetic clusters comprising native cocoas from the "Beni/Madre de Dios/Urubamba" river valleys, "Yavari/Jarua" river valleys, and "Putumayo/Caqueta" river valleys, or a hybrid of at least two of the genetic clusters.

In another more preferred embodiment, the cocoa cultivar is selected from the group consisting of the genetic clusters "Amelonado", "Contamana", "Criollo", "Curaray", "Guiana", "Iquitos", "Marañon", "Nacional", "Nanay" and "Purús"further genetic clusters comprising native cocoas from the "Beni/Madre de Dios" river valleys, "Yavari/Jarua" river valleys, and "Putumayo/Caqueta" river valleys, or a hybrid of at least two of the genetic clusters.

In another more preferred embodiment, the cocoa cultivar is selected from the group consisting of the genetic clusters "Amelonado", "Contamana", "Curaray", "Guiana", "Iquitos", "Marañon", "Nacional", "Nanay" and "Purús"further genetic clusters comprising native cocoas from the "Beni/Madre de Dios" river valleys, "Yavari/Jarua" river valleys, and "Putumayo/Caqueta" river valleys, or a hybrid of at least two of the genetic clusters.

In order to obtain cocoa beans with regular organoleptic quality, i.e. without any undesirable flavors, the at least one cocoa pod is harvested in a ripe and mature state. The criteria for determining a ripe and mature state of a cocoa pod (e.g. external and internal appearance, aroma and texture) depend on the cocoa cultivar and are assessed by cocoa experts or farmers with longtime experience on cocoa.

The at least one cocoa pod is usually broken or cut open, followed by separating cocoa beans and cocoa pulp (e.g. by hand)from the opened pod. This procedure follows the common procedures applied in the region where the present invention is applied and depends on the cocoa varieties used. The husk of the pod surrounding the cocoa beans and cocoa pulp is separated from the placenta, leaving the beans and pulp behind as a fresh mixture of cocoa beans and cocoa pulp.

The intentional delay of the pod opening is referred to as "pod storage" and is a common method for pulp preconditioning. It is applied on many plantations worldwide with the purpose to lower the degree of acidification during subsequent fermentation and thus to reduce the acid flavor of cocoa end-product. During pod storage, a reduction in pulp volume per seed occurs without substantial decrease of pulp sugars per seed.

In a preferred embodiment, a harvested ripe cocoa pod is stored for a certain period, thus a ripe cocoa pod is preferably opened 0 to 96 hours, 24 to 168 hours, 96 to 168 hours or 168 to 360 hours after step (i), preferably 0 to 6 hours, 6 to 12 hours, 12 to 24 hours, 48 to 63 hours, 24 to 96 hours, 90 to 96 hours, 96 to 102 hours, 162 to 168 hours, or 168 to 174 hours, after step (i).

A further pulp preconditioning method next to pod storage is to remove at least one part of the pulp and/or cocoa honey from wet or fresh cocoa beans (also referred to as "depulping"). Depulping procedures comprise the removal of pulp, e.g. by hand, a depulping machine or enzymatic conversion, by pressing with hands or pressing with any applicable press (also referred to as "bean pressing"), preferably with a hydraulic press.

In one preferred embodiment, pulp is removed in an amount of from 1 to 99 weight-%, or of an amount of from 5 to 95 weight-%, or of an amount of from 10 to 90 weight-%, or of an amount of from 20 to 80 weight-%, or of an amount of from 30 to 70 weight-%, or of an amount of from 40 to 60 weight-%, based on the total mass of cocoa pulp present in the fresh mixture.

In a more preferred embodiment, the pulp is not removed but fully maintained with cocoa beans.

In the present disclosure, the draining step (also referred to as drainage) serves two purposes, namely to reduce the amount of pulp and, in particular, to use part of the cocoa honey (also referred to as cocoa pulp juice) yielded during the draining as inoculant in a later step of the process. In general, draining is a preconditioning method to allow cocoa honey, i.e. the liquid portion of cocoa pulp, to slowly run out of wet cocoa beans. Draining considerably differs from depulping (e.g. via pressing), namely by the duration of said procedure. Depulping cocoa beans is typically finished within a few minutes, whereas the period of draining is remarkably longer, e.g. at least 10 hours, preferably at least 14 hours, and e.g. maximally 30 hours, preferably maximally 24 hours. In a preferred embodiment, draining is performed over a period of from 14 to 16 hours, or 16 to 18 hours, or 18 to 20 hours, or 20 to 24 hours.

The drainage of cocoa pulp juice can be succeeded by any method allowing the slow dripping of cocoa pulp juice from the wet cocoa beans, such as hanging wet cocoa beans in any permeable bag or sack (e.g. made of cotton or linen), placing wet cocoa beans on a net made of any material and with applicable mesh size, placing wet cocoa beans on a grid made of any material and with suitable distances between each bar, or preferably placing wet cocoa beans in a suitable permeable drainage container of any size.

Typically, the most suitable dimensions of said permeable drainage container may also depend on the volume of cocoa beans and pulp, the type of cocoa honey-based inoculant or the type of aromatic substance. The containers are preferably boxes made of any polymer (e.g. polypropylene, polystyrene or copolymers), wood or any other applicable material that sufficiently allows the juices formed during the draining to flow out. Preferred containers are plastic fruit boxes or typical wooden fermentation boxes of various dimensions, e.g. 30x50x30 cm or 60x70x60 cm. The permeable drainage container is typically perforated in the bottom and optionally in the lateral walls, wherein the openings may be of any shape with at least one dimension smaller than one average cocoa bean used (e.g. rectangular-shaped with a width of 0.5 cm and a length of 6 cm or circular-shaped with a diameter of 0.8-1.2 cm).The openings in the bottom and optionally the lateral walls of the permeable drainage container may comprise 3 to 50 %, preferably 3 to 6 %, or 20 to 25 %, based on the total surface of the bottom and the lateral walls.

In another preferred embodiment, the fresh mixture of cocoa beans and pulp in a permeable drainage container is covered by any coverage able to shield the mixture from surrounding influences (e.g. dust, insects) and additionally able to provide sufficient aeration of the fresh mixture of cocoa beans and pulp. Suitable coverages may be any cover (i.e. sheet or layer) made of any material fulfilling said criteria, such as wood, synthetic material, cotton, jute or nylon (e.g. nylon bag). The coverage may be placed directly on top of the fresh mixture or on top of the container.

If step (iv) is present, the draining step (iii) is present after step (ii) and prior to step (iv). The fresh mixture of cocoa beans and cocoa pulp as obtained in step (ii) is subjected to draining, separating off cocoa honey, and is then further treated in step (iv). If step (iv) is absent, the draining step (iii) is present after step (ii) and prior to step (v). The fresh mixture of cocoa beans and cocoa pulp as obtained in step (ii) is subjected to draining, separating off cocoa honey, and is then further treated in step (v).

In one embodiment, during the draining step, a weight reduction of an amount of from 5 to 20 weight-% is obtained, based on the total mass of the fresh mixture of cocoa beans and cocoa pulp, and wherein the draining is performed over a period of from 10 to 30 hours.

In a preferred embodiment, during the draining step (iii), a weight reduction of an amount of from 5 to 8 weight-% is obtained, or of an amount of from 6 to 8 weight-% is obtained, or of an amount of from 8 to 9 weight-%, or of an amount of from 8 to 12 weight-%, or of an amount of from 9 to 11 weight-%, or of an amount of from 11 to 13 weight-%, or of an amount of from 13 to 15 weight-%, based on the total mass of the fresh mixture of cocoa beans and cocoa pulp, and wherein the draining is performed over a period of from 14 to 16 hours, or 16 to 18 hours, or 18 to 20 hours, or 20 to 24 hours.

In another preferred embodiment, during the draining step (iii), a weight reduction of an amount of from 5 to 8 weight-% is obtained, or of an amount of from 6 to 8 weight-% is obtained, or of an amount of from 8 to 9 weight-%, or of an amount of from 8 to 12 weight-%, or of an amount of from 9 to 11 weight-%, or of an amount of from 11 to 13 weight-%, or of an amount of from 13 to 15 weight-%, based on the total mass of the fresh mixture of cocoa beans and cocoa pulp, independent of the period of draining.

In another preferred embodiment, the draining step is performed over a period of from 10 to 30 hours, preferably over a period of from 14 to 16 hours, or 16 to 18 hours, or 18 to 20 hours, or 20 to 24 hours, independent of the weight reduction.

Partial drying (also referred to as "bean spreading") is, similarly to pod storage or depulping, a preconditioning mode aiming at reducing pulp. Typically, cocoa beans and pulp are spread on a plain area of any suitable size made of a non-permeable material such as stone, plastic, or preferably wood. Preferably, each cocoa bean of the spread cocoa beans is in direct contact with the plain area. The plain area is used to expose the cocoa beans to air and, depending on the weather conditions, to full sunshine, partial shade or shade. Bean spreading may be performed on a wooden board (i.e. plank) under full sunshine.

In one embodiment, the method further comprises a partial drying step of the fresh mixture of cocoa beans and cocoa pulp prior to step (iii) and after step (ii). In other words, the fresh mixture is first partially dried and then drained. In another embodiment, if step (iv) is present, the method further comprises a partial drying step of the drained mixture prior to step (iv) and after step (iii). In other words, the drained mixture is partially dried and then inoculated in step (iv). In another embodiment, if step (iv) is absent, the method further comprises a partial drying step of the drained mixture prior to step (v) and after step (iii). In other words, the drained mixture is partially dried and then fermented in step (v).

In another embodiment, two partial drying steps are performed. Two partial drying steps result in a higher weight reduction of cocoa beans and pulp with regard to one partial drying step.

In another embodiment, during the partial drying step, a weight reduction of an amount of from 5 to 50 weight-% is obtained, based on the total mass of the fresh mixture, and wherein the partial drying is performed over a period of from 0 to 20 hours.

In another embodiment, during the partial drying step, a weight reduction of an amount of from 5 to 50 weight-% is obtained, preferably of from 5 to 10 weight-%, or of an amount of from 10 to 20 weight-%, or of an amount of from 20 to 30 weight-%, based on the total mass of the fresh mixture, independent of the period of partial drying.

In yet another preferred embodiment, the partial drying step is performed over a period of from 0 to 20 hours, preferably of from 1 to 2 hours, 2 to 3 hours, 3 to 4 hours, 4 to 5 hours, or 5 to 6 hours, independent of the weight reduction.

In a preferred embodiment, a partial drying step is absent.

The method further comprises a perforation step of the fresh mixture of cocoa beans and cocoa pulp prior to, at the initiation and/or during the draining step (iii).

By means of the perforation step, the surface of a mixture of cocoa beans and pulp is increased, which thus facilitates the expulsion of gas and liquid generated in said mixture during draining. The perforation of the mixture is also referred to as "vertical ventilation" since the horizontal plane of cocoa beans is vertically perforated causing increased ventilation (and draining). In order to successfully perforate, any polyhedral (e.g. cylindrical or rectangular) rod (i.e. stick or bar) made of any material (e.g. wood, metal or polymer) may be used. Suitable rods are those, which either do not stick or hardly stick to cocoa beans and pulp. The diameter of the rod may be of a size of from 0.5 to 5.0 cm, preferably a diameter of a size of from 0.5 to 1.0 cm, 1.0 to 1.5 cm, 1.5 to 2.0 cm, 2.0 to 3.0 cm, 3.0 cm to 4 cm, 3.5 cm to 4.5 cm, or 4.0 cm to 5.0 cm, and more preferably a diameter of a size of from 1.0 to 2.5 cm. In a preferred embodiment, the rod is cylindrical, preferably a wooden stick. Typically, prior to or at the initiation of draining, a rod is stuck into the cocoa beans with pulp, followed by the careful removal of the rod, thereby obtaining a perforated mixture of cocoa beans and pulp. Depending on the required degree of vertical ventilation, the number of perforations per area may vary. The generated perforations may be 6 to 15 cm apart from each other, preferably 10 to 15 cm, more preferably 8 to 12 cm.

In a preferred embodiment, the fresh mixture of cocoa beans and pulp is subjected to a perforation step prior to and during step (iii), wherein the permeable drainage container exhibits openings in the bottom and optionally openings in the lateral walls.

In a more preferred embodiment, the fresh mixture of cocoa beans and pulp is subjected to a perforation step prior to and during step (iii), wherein the permeable drainage container exhibits openings only in the bottom, thus without openings in the lateral walls. Sufficient aeration is warranted by the perforation of the fresh mixture of cocoa beans and pulp during the draining, therefore a permeable drainage container with openings in the bottom and without openings in the lateral walls is preferably chosen.

In one embodiment, the method disclosed herein comprises an inoculation step (iv). The inoculant used in step (iv) is based on cocoa honey (cocoa pulp juice) that is preferably gained during the draining step (iii), from the same draining container, or optionally taken from another source.

In a more preferred embodiment, the cocoa honey-based inoculant is cocoa honey obtained during draining step (iii).

In another more preferred embodiment, cocoa honey obtained during draining in step (iii) is subsequently used for the inoculation of said drained mixture.

The cocoa honey is typically obtained as a clear homogeneous liquid, which is used for the preparation of the inoculant with optional centrifugation of the cocoa honey in a blender during 2-3 minutes. Heterogeneous cocoa honey (i.e. suspension) comprising clear cocoa honey and solid parts of cocoa beans and/or pulp (e.g. at least one part of placenta) may also be used without further treatment or, if necessary, the solid parts may be separated from the cocoa honey by hand, filtration (e.g. via sieving) or any other applicable separation method.

The cocoa honey used in the present disclosure is usually contaminated by at least one naturally occurring microorganism required for fermenting cocoa beans, namely yeast, lactic acid bacteria or acetic acid bacteria. The contamination of the cocoa honey may occur during step (i), step (ii) and/or step (iii). However, the microorganisms may as well be already present in the pulp prior to pod opening (e.g. in the case of diseased, wounded or insect attacked pods), or in the pulp of the freshly opened cocoa pod, usually in small amounts, if at all. Typical external contamination sources may be farmers (e.g. hands), surrounding soil, air, cocoa pods (outside surface) and/or used equipment plus insects.

In another embodiment, a natural leaf is added to the cocoa honey for the introduction of further microorganisms. In another preferred embodiment, the natural leaf is selected from the group consisting of *Musa acuminata, Musa balbisiana, Theobroma cacao,* any hybrids and polyploids thereof. The natural leaf preferably comprises at least one naturally occurring microorganism required for fermenting cocoa beans, namely yeast, lactic acid bacteria or acetic acid bacteria. Any other natural leaf providing said series of microorganisms may also be used. For the preparation of the cocoa honey-natural leaf-based inoculant, the natural leaf of choice is triturated by any applicable means in order to reduce the natural leaf into small pieces or particles (e.g. cutting with a knife, using a blender or shredder), followed by suspending said triturated natural leaf in cocoa honey.

In another embodiment, one batch of cocoa honey-natural leaf-based inoculant comprises or consists of 5 to 80 grams of triturated natural leaf pieces, and more preferably comprises or consists of 10 to 30 grams of triturated natural leaf pieces, per liter of cocoa honey. In another embodiment, the concentration of the cocoa honey-natural leaf-based inoculant may vary according the needs. The amount of triturated natural leaf may be above 80 grams or below 5 grams, based on cocoa honey of a volume of one Liter, of a volume of less than one Liter, or of a volume more than one Liter.

In a preferred embodiment, the cocoa honey-based inoculant does not comprise a natural leaf. In other words, the cocoa honey-based inoculant is cocoa honey.

In a preferred embodiment, the yeast species comprises *Hanseniaspora guilliermondii, Pichia kudriavzevii, Kluyveromyces marxianus* or *Saccharomyces cerevisiae.* Further yeast species may be any yeast able to undergo alcoholic fermentation in order to convert pulp sugars to ethanol and by-products.

In another preferred embodiment, the lactic acid bacteria species comprises *Lactobacillus plantarum, Lactobacillus lactis* and *Lactobacillus fermentum.* Further lactic acid bacteria species may be any lactic acid bacteria able to convert pulp sugars and compounds derived from the alcoholic fermentation of pulp sugars to lactic acid and by-products.

In another preferred embodiment, the acetic acid bacteria species comprises *Acetobacter pasteurianus* and *Gluconabacterfrateurii.* Further acetic acid bacteria species may be any acetic acid bacteria able to convert pulp sugars and compounds derived from the alcoholic fermentation of pulp sugars (e.g. ethanol) to acetic acid and by-products.

In a preferred embodiment, the cocoa honey-based inoculant comprises at least one species of yeast, lactic acid bacteria or acetic acid bacteria.

In a more preferred embodiment, the cocoa honey-based inoculant comprises at least one species of yeast and at least one species of lactic acid bacteria, or at least one species of yeast and at least one species of acetic acid bacteria, or at least one species of lactic acid bacteria and at least one species of acetic acid bacteria.

In a most preferred embodiment, the cocoa honey-based inoculant comprises at least one species of yeast, at least one species of lactic acid bacteria and at least one species of acetic acid bacteria.

In a preferred embodiment, inoculation step (iv) is present, and the cocoa honey-based inoculant is added to the drained mixture.

The amount of cocoa honey-based inoculant added to the drained mixture may depend on the cocoa cultivar, the aromatic substance, the preconditioning (e.g. pod storage or bean spreading), vertical ventilation, characteristics of the fermentation recipient, the volume of cocoa beans to be fermented and the amount of natural leaf present in cocoa honey.

In a preferred embodiment, the cocoa honey-based inoculant is added in step (iv) in an amount of from 0.1 to 10 weight-%, in an amount of from 0.1 to 8 weight-%, in an amount of from 0.2 to 6 weight-%, or in an amount of from 1 to 6 weight-%, or in an amount of from 0.5 to 4,0 weight-%, preferably in an amount of 1 weight-%, or in an amount of 2 weight-%, 4 weight-%, or 6 weight-%, based on the total mass of the drained mixture.

In another preferred embodiment, the cocoa honey-based inoculant is added in step (iv) in an amount of from 0.1 to 10 weight-%, in an amount of from 0.1 to 8 weight-%, in an amount of from 0.2 to 6 weight-%, or in an amount of from 1 to 5 weight-%, or in an amount of from 0.5 to 4.5 weight-%, preferably in an amount of 2 weight-%, or in an amount of 2 weight-%, 4 weight-%, or 6 weight-%, based on the total mass of the drained mixture.

For fermenting cocoa beans according to the present disclosure, the inoculated mixture is placed in a permeable fermentation container exhibiting openings at least in the bottom. Fermentation according to the present disclosure is possible with any permeable container of any size (depending on the volume of cocoa beans, the type of cocoa honey-based inoculant and/or the type of aromatic substance). The same permeable container used for the draining may be used. The containers are preferably boxes made of any polymer (e.g. polypropylene, polystyrene or copolymers), wood or any other applicable material that sufficiently allows the juices formed during the draining to flow out. Preferred containers are polystyrene boxes or typical wooden fermentation boxes of various dimensions, e.g. 20x30x25 cm, 20x30x30 cm or 60x70x60 cm.

The permeable fermentation container preferably exhibits openings in the bottom only, and alternatively in the bottom and in the lateral walls. The openings may be of any shape with at least one dimension smaller than one average cocoa bean used (e.g. rectangular-shaped with a width of 0.5 cm and a length of 6 cm or circular-shaped with a diameter of 0.8-1.2 cm).

In a preferred embodiment, the openings in the bottom of the permeable fermentation container comprise 1 to 30 %, based on the total surface of the bottom, more preferably comprise 1 to 2 %, 2 to 3 %, 3 to 4 %, 4 to 8 %, 8 to 12 %, 12 to 16 %, 16 to 20 %, 20 to 24 %, 24 to 25 %, 25 to 26 %, or 26 to 30 %, based on the total surface of the bottom.

The openings in the lateral walls of the permeable fermentation container preferably comprise 1 to 30 %, based on the total surface of the lateral walls, more preferably comprise 1 to 2 %, 2 to 3 %, 3 to 4 %, 4 to 8 %, 8 to 12 %, 12 to 16 %, 16 to 20 %, 20 to 24 %, 24 to 25 %, 25 to 26 %, or 26 to 30 %, based on the total surface of the lateral walls.

In a preferred embodiment, the inoculated mixture in the permeable fermentation container is subjected to a perforation step ("vertical ventilation"). Said vertical ventilation is similar to the one performed in the draining step, and aims at increasing the surface of the inoculated mixture, which thus facilitates the expulsion of gas and liquid generated in said mixture during fermentation. In order to successfully perforate, any polyhedral (e.g. cylindrical or rectangular) rod (i.e. stick or bar) made of any material (e.g. wood, metal or polymer) may be used. Suitable rods are those, which either do not stick or hardly stick to cocoa beans and pulp. The diameter of the rod may be of from 0.5 to 1.0 cm, 1.0 to 1.5 cm, 1.5 to 2.0 cm, 2.0 to 3.0 cm, 3.0 cm to 4 cm, 3.5 cm to 4.5 cm, or 4.0 cm to 5.0 cm, and more preferably a diameter of a size of from 1.0 to 2.5 cm.. In a preferred embodiment, the rod is cylindrical, preferably a wooden stick. Typically, prior to or at the initiation of fermentation, a rod is stuck into the cocoa beans with pulp, followed by the careful removal of the rod, thereby obtaining a perforated mixture of cocoa beans and pulp. Depending on the required degree of vertical ventilation, the number of perforations per area may vary. The generated perforations may be 6 to 15 cm apart from each other, preferably 10 to 15 cm, more preferably 8 to 12 cm. The perforation is preferably iterated during the fermentation step (v) at regular intervals, preferably of about 24 hours after every turning of the fermentation mass.

In a preferred embodiment, the inoculated mixture is subjected to a perforation step prior to and during step (v), wherein the permeable fermentation container exhibits openings in the bottom and openings in the lateral walls.

In a more preferred embodiment, the inoculated mixture is subjected to a perforation step prior to and during step (v), wherein the permeable fermentation container exhibits openings only in the bottom, thus without openings in the lateral walls. Sufficient aeration is warranted by the perforation of the inoculated mixture during the fermentation, therefore a permeable fermentation container with openings in the bottom and without openings in the lateral walls is preferably chosen.

In another preferred embodiment, the inoculated mixture in the permeable fermentation container is covered by any coverage able to shield the mixture from surrounding influences (e.g. dust, insects) and additionally able to provide sufficient aeration of the inoculated mixture. Suitable coverages may be any cover (i.e. sheet or layer) made of any material fulfilling said criteria, such as cotton, jute or nylon (e.g. nylon bag). The coverage may be placed directly on top of the fresh mixture or on top of the container.

In a preferred embodiment, the inner lateral walls of the permeable fermentation container are covered with a natural leaf.

In a more preferred embodiment, if the openings of the lateral walls comprise 5 % or more, the inner lateral walls of the permeable fermentation container is preferably covered with at least one natural leaf, in order to impede an early cooling process of cocoa beans due to an accelerated expulsion of heat generated during fermentation. The natural leaf used to cover the inner lateral walls is preferably selected from the group consisting of *Musa acuminata, Musa balbisiana,* any hybrids and polyploids thereof. Any other plant may be the source of an applicable natural leaf, however approximate dimensions of a typical medium to large sized banana leaf should be given (e.g., at least 1 meter in length and 30 cm in width).In addition, the natural leaf is preferably replaced after a turning of the inoculated mixture (after about 24 hours), more preferably replaced after every turning of the inoculated mixture until the termination of fermentation.

In another preferred embodiment, at least one part of the surface area of the permeable fermentation container is covered with a natural leaf during step (iii) and/or step (v). The permeable fermentation container, such as a plastic fruit box, may thus be preferably placed on top of at least one layer of natural leaf, more preferably placed on top of at least one layer of natural leaf and wherein the outer surface of lateral walls are also covered by at least one layer of natural leaf. Accordingly, some parts or every part of said surface (bottom and/or lateral walls) may be covered with natural leaf. The natural leaf used to cover the surfaceis preferably selected from the group consisting of *Musa acuminata, Musa balbisiana,* any hybrids and polyploids thereof. Any other plant may be the source of an applicable natural leaf, however approximate dimensions of a typical medium to large sized banana leaf should be given (e.g., at least 1 meter in length and 30 cm in width).The permeable fermentation container covered with natural leaf from the outside is typicallyplaced on the ground under tree canopies of any type oftree growing in the specific farm regions.

In another preferred embodiment, at least one part of surface of the permeable fermentation container is accordingly covered with natural leaf and the top of the inoculated mixture or the top of the permeable fermentation container is covered with a coverage (e.g. cotton, jute or nylon).

In another preferred embodiment, the inoculated mixture is turned at least once during the fermentation in order to obtain homogeneously fermented cocoa beans. By turning the fermentation mass, it is ventilated thereby supporting a homogeneous fermentation of the mass. A turning is preferably performed at regular intervals of about 24 hours until the end of fermentation. Said period may vary depending on e.g. the cocoa variety used, the inoculant or the aromatic substance.

With the initiation of fermentation, microbiological processes outside and inside cocoa beans produce heat that gradually declines with the decrease of substrates for the microorganisms. In the present disclosure, the termination of fermentation is on the one hand determined by a significant decrease of temperature below the average fermentation temperature. Frequent monitoring, preferably every 12 hours, of the temperature of the inoculated mixture is needed for said determination of the fermentation end. The drop in temperature may vary depending on e.g. the used cocoa variety, the introduction of ventilation holes during draining and/or fermentation, the concentration of the cocoa honey-based inoculant and the addition of aromatic substances. The typical period of fermentation may vary from 2 to 6 days. By terminating the fermentation process, the production of undesired side-products is reduced or eliminated. The termination of the fermentation process is thus an important element of the entire fermentation process of the present disclosure. The fermentation step is terminated by, e.g., drying and/or roasting the fermentation mass (i.e. the fermented cocoa beans).

In a preferred embodiment, the temperature of the inoculated mixture typically drops by1 to 20 °C, preferably by 1 to 15 °C, 1 to 10 °C, 1 to 5 °C, 16 to 17 °C, 15 to 16 °C, 12 to 13 °C, 11 to 12 °C, 9 to 10 °C, 8 to 9 °C, 7 to 8 °C, 6 to 7 °C, 5 to 6 °C, 4 to 5 °C, 3 to 4 °C, or 1 to 3 °C, thereby indicating the end of the fermentation step.

In another preferred embodiment, the determination of the fermentation end by temperature monitoring is complemented by a sensory evaluation of the inoculated mixture. The fermentation is terminated if cocoa beans exhibit no or low acidity, bitterness and/or astringency.

The physical appearance of cocoa beans including the higher degree of cotyledon openings may be a further criteria applied to determine the termination of the fermentation.

Depending on the desired aromatic profile of the fermented cocoa beans, aromatic substances can be added at different stages of the present disclosure. In a preferred embodiment, aromatic substance is added before, at the initiation, during, at the end or after step (vi), more preferably before, at the initiation, during, at the end or after step (v), and most preferably before, at the initiation, during, at the end or after step (iv).The addition of aromatic substances is not exclusively limited to one addition but may be multiple according to the needs. Preferably, aromatic substances are added at the occasion of turning of the fermentation mass, if aromatic substances are added during fermentation step (v).

In a preferred embodiment, aromatic substances to modify the flavor of cocoa beans are selected from natural aromatic substances, nature-identical aromatic substances, artificial aromatic substances and mixtures thereof, more preferably natural aromatic substances.

In certain embodiments, the natural aromatic substance is a plant or part(s) of a plant (fresh, dehydrated or dried, ground and dried or first dried and then ground), preferably a fresh plant or part(s) of a fresh plant. Excluded are medium-sized to large leaves that are used to cover up cocoa beans during the fermentation process, such as banana tree leaves. Also excluded are medium-sized to large leaves that are used to cover the floor before the permeable fermentation container cocoa beans are placed thereupon, such as large banana tree leaves. Excluded are any kinds of often green or greenish leaves without flavor and/or aroma, i.e. leaves that are not capable to modify the aromatic profile of cocoa beans.

Suitable natural aromatic substances include fresh, frozen or dried aromatic fruit, fruit pulp, juice (such as juice made of fruit pulp) and any other part of an aromatic plant (e.g. leaves, roots, flowers, flower buds, barks, stems, wooden parts, pieces of aromatic timber, dried plant parts which are ground or not ground).

In a preferred embodiment, triturated solid aromatic substance and/or liquid aromatic substance is mixed according to the needs with water and/or cocoa honey before, at the initiation, during, at the end or after step (v) and/or step (vi).

In a more preferred embodiment, triturated solid aromatic substance and/or liquid aromatic substance is blended with the cocoa honey-based inoculant and the resulting mixture of aromatized cocoa honey-based inoculant is added to the cocoa beans according to step (iv).

Depending on the desired degree of aromatic flavors in the cocoa end product, the amount of added aromatic substance may vary from 0.005 to 25 weight-%, or preferably from 1 to 15 weight-%, from 1 to 10 weight-%, from 1 to 5 weight-%, from 0.01 to 2.5 weight-%, from 0.005 to 0.010 weight-%, from 0.005 to 0.015 weight-%, or from 0.005 to 0.025 weight-%, or is present in an amount of 0.04 weight-%, 0.05 weight-%, 0.2 weight-%, 0.3 weight-%, 0.24 weight-%, 0.25 weight-%, 2.5 weight-%, or 5 weight-%, based on the total mass of the inoculated mixture and/or of the fermented cocoa beans.

In case the aromatic substance(s) is added at the initiation or during step (vi), the aromatic substance(s) are blended with water (e.g. normal water, purified water or distilled water) or preferably with cocoa honey, thereby obtaining a suspension which is added to the fermented cocoa beans during drying and/or roasting in step (vi). The addition of said suspension may be iterated depending on the desired degree of aromatic flavors.

In a preferred embodiment, the natural aromatic substance is a plant or is a part of a plant or is gained from a plant, wherein the plant is selected from the group consisting of *Alipinia galangal, Anacardium occidentale, Ananas comosus, Anethum graveolens, Annona muricata, Annona cherimolia, Annona diversifolia, Annona reticulata, Annona squamosa, Artocarpus champeden, Artocarpus heterophyllus, Averrhoa bilimbi, Averrhoa carambola, Boesenbergia pandurata, Capsicum spp., Cinnamomum spp., Cinnamomum verum, Coriandrum sativum, Cuminium cyminum, Curcuma domestica, Cymbopogon citratus, Calocarpum sapota, Carica cauliflora, Carica papaya, Chrysophyllum cainito, Citrullus lanatus, Citrus spp., Cocus nucifera, Coffea spp., Crysofphyllum cainito, Cucumis melo, Duriob zibethinus, Dyospyros ebenaster, Dyospyros digyna, Dyospyros spp, Elettaria cardamomum, Eryngium foetidum, Eugenia brasiliensis, Eugenia caryophyllus, Eugenia stipitata, Eugenia uniflora, Euterpe oleracea, Foeniculum vulgare, Garcinia mangostana, Genipa americana, Hancornia speciosa, Hibiscus sabdariffa, Hibiscus surattensis, Hibiscus rosa-sinensis, Illicium verum, Inga spp., Lansium domesticum, Lucuma nervosa, Malpighia glabra, Mammea americana, Mangifera indica, Manilkara zapota, Melicocca bijuca, Melissa officinalis, Mentha arvensis var. javanica, Musa spp., Myrciaria cualiflora, Myrciaria dubia, Myristicafragrans, Nephelium lappaceum, Ocimum spp., Passiflora edulis, Passiflora edulis var. flavicarpa, Passiflora spp., Persea americana, Phyllantus acidus, Pimenta dioica, Piper nigrum, Platonia insignis, Plectranthus amboinicus, Plinia edulis, Polygonum odoratum, Pouroma cecropifolia, Pouteria caimito, Pouteria champechiana, Psidium guajava, Rollinia mucosa, Rosmarinus officinalis, Salvia officinalis, Syzygium aromaticum, Solanum quitoense, Solanum topiro, Spondias cytherea, Spondias lutea, Spondias mombin, Spondias purpurea, Syzygium cumini, Syzygium malaccence, Talisia esculenta, Tamarindus indica, Theobroma grandiflorum, Trigonella foenum-graecum, Vanilla fragrans and Zingiber officinale, and is preferably selected from the group consisting of Theobroma grandiflorum, Syzygium aromaticum, Annona muricata, Cinnamomum verum, Hibiscus sabdariffa, Mangifera indica* and *Rosmarinus officinalis.*

In one embodiment, the cocoa beans are fermented in a rotating device, preferably in a rotating drum. In this case, the perforation step during the fermentation is preferably not performed.

Finally, the fermented cocoa beans are dried and/or roasted. This steps terminates the fermentation of the cocoa beans. Drying of the fermented cocoa beans may be performed in the sun, e.g. for five to ten days or by artificial heating devices until humidity levels of about 5 % to about 10 %, preferably of about 7 % to about 9 %, are reached, before being sold by farmers on the market.

Due to the low intensities of unpleasant flavors (acidity, bitterness and astringency) of the cocoa beans provided in this invention, roasting may be performed at lower temperature than for traditionally fermented cocoa beans. Fermented and optionally dried cocoa beans may be subjected to roasting temperatures of between 80 and 120 °C for 20 to 30 minutes. Accordingly, fine flavors and aromas may be further expressed.

One embodiment of the present disclosure is directed to a fermentation process, wherein the process comprises the steps:
a. Providing at least one cocoa pod from bulk cocoa varieties;
b. Pod storing the at least one cocoa pod, thereby providing a pod stored cocoa pod;
c. Separating cocoa beans and cocoa pulp from the stored cocoa pod by hand, thereby providing a fresh mixture of cocoa beans and pulp;
d. Pre-treating the fresh mixture of cocoa beans and pulp by depulping, pressing and/or partial drying, thereby providing a pretreated mixture of cocoa beans and pulp;
e. Draining off cocoa honey from the pretreated mixture of cocoa beans and pulp in a polymer-based or wooden permeable drainage container exhibiting openings in the bottom and in the lateral walls, the step including a regular perforation of the fresh mixture prior to and/or during draining with a wooden stick with a diameter of about 1.5 cm, thereby providing a drained mixture, wherein the weight reduction is about 8 to 12 %, based on the total mass of the fresh mixture;;
f. Inoculating the drained mixture with cocoa honey-banana leaf-based or cocoa honey-cocoa leaf-based, wherein the inoculant is present in an amount of about 1 weight-%, based on the total mass of the drained mixture, thereby providing an inoculated mixture;
g. Fermenting the inoculated mixture in a polymer-based or wooden permeable container exhibiting openings in the bottom and optionally in the lateral walls;
h. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
i. Drying the fermented cocoa beans in the sun and/or in heated air.

A preferred embodiment of the present disclosure is directed to a fermentation process, wherein the process comprises the steps:
a. Providing at least one cocoa pod from bulk cocoa varieties;
b. Pod storing of the at least one cocoa pod for up to 4 days (96 hours), thereby providing a pod stored cocoa pod;
c. Separating cocoa beans and cocoa pulp from the stored pod cocoa pod by hand, thereby providing a fresh mixture of cocoa beans and pulp;
d. Draining off cocoa honey from the fresh mixture of cocoa beans and pulp in a permeable drainage container (plastic or wooden) exhibiting up to 20 to 25 % openings in the bottom and optionally in the lateral walls, based on the total surface of the bottom and lateral walls; the step including a regular perforation of the fresh mixture prior to and/or during draining with a wooden stick with a diameter of about 1.5 cm, thereby providing a drained mixture, wherein the weight reduction is about 8 to 12 %, based on the total mass of the fresh mixture;
e. Inoculating the drained mixture with a cocoa honey-based inoculant, wherein the inoculant is present in an amount of about 2 weight-%, based on the total mass of the drained mixture, thereby providing an inoculated mixture;
f. Fermenting the inoculated mixture in a permeable fermentation container exhibiting 2 to 6 % of openings in the bottom and 10-25 % of openings in the lateral walls, based on the total surface of the bottom and the lateral walls; the step including the coverage of the inner lateral walls with banana leaves, wherein the banana leaves are replaced about every 24 hours; the step including a regular perforation (e.g. at each turning of the fermentation mass) of the inoculated mixture prior and/or during fermentation with a wooden stick with a diameter of about 1.5 cm, thereby providing fermented cocoa beans;
g. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
h. Drying the fermented cocoa beans in the sun and/or in heated air.

Another preferred embodiment of the present disclosure is directed to a fermentation process, wherein the process comprises the steps:
a. Providing at least one cocoa pod from bulk cocoa varieties;
b. Pod storing the at least one cocoa pod, thereby providing a pod stored cocoa pod;
c. Separating cocoa beans and cocoa pulp from the stored cocoa pod by hand, thereby providing a fresh mixture of cocoa beans and pulp;
d. Draining off cocoa honey from the fresh mixture of cocoa beans and pulp in a polymer-based or wooden permeable drainage container only exhibiting openings in the bottom and optionally in the lateral walls, the step including a regular perforation of the fresh mixture prior to and/or during draining with a wooden stick with a diameter of about 1.5 cm, thereby providing a drained mixture;
e. Addition of desired aromatic substance to the cocoa honey-based inoculant, thereby providing an aromatized cocoa honey-based inoculant;
f. Inoculation of the drained mixture with the aromatized cocoa honey-based inoculant, thereby providing an inoculated mixture;
g. Fermenting the inoculated mixture in a permeable fermentation container exhibiting openings in the bottom and optionally in the lateral walls; the step including a regular perforation (e.g. at each turning of the fermentation mass) of the inoculated mixture prior and/or during fermentation with a wooden stick with a diameter of about 1.5 cm, thereby providing fermented cocoa beans;
h. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
i. Drying the fermented cocoa beans in the sun and/or in heated air.

Another preferred embodiment of the present disclosure is directed to a fermentation process, wherein the process comprises the steps:
a. Providing at least one cocoa pod from bulk cocoa varieties;
b. Pod storing the at least one cocoa pod for up to 4 days (96 hours), thereby providing a pod stored cocoa pod;
c. Separating cocoa beans and cocoa pulp from the stored cocoa pod by hand, thereby providing a fresh mixture of cocoa beans and pulp;
d. Draining off cocoa honey from the fresh mixture of cocoa beans and pulp in a permeable drainage container (plastic or wooden) exhibiting upto 20 to 25 %openings in the bottom and optionally in the lateral walls, based on the total surface of the bottom and lateral walls; the step including a regular perforation of the fresh mixture prior to and/or during draining with a wooden stick with a diameter of about 1.5 cm, thereby providing a drained mixture, wherein the weight reduction is about 8 to 12 %, based on the total mass of the fresh mixture;
e. Inoculating the drained mixture with a cocoa honey-based inoculant, wherein the inoculant is present in an amount of about 4 weight-% or 6 weight-% based on the total mass of the drained mixture, thereby providing an inoculated mixture;
f. Fermenting the inoculated mixture in a permeable fermentation container exhibiting 2 to 6 % of openings in the bottom, based on the total surface of the bottom, the step including a regular perforation (e.g. at each turning of the fermentation mass) of the inoculated mixture prior and/or during fermentationwith a wooden stick with a diameter of about 1.5 cm, thereby providing fermented cocoa beans;
g. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
h. Drying the fermented cocoa beans in the sun and/or in heated air.

Another preferred embodiment of the present disclosure is directed to a fermentation process, wherein the process comprises the steps:
a. Providing at least one cocoa pod from bulk cocoa varieties;
b. Pod storing the at least one cocoa pod for up to 4 days (96 hours), thereby providing a pod stored cocoa pod;
c. Separating cocoa beans and cocoa pulp from the stored cocoa pod by hand, thereby providing a fresh mixture of cocoa beans and pulp;
d. Draining off cocoa honey from the fresh mixture of cocoa beans and pulp in a permeable drainage container (plastic or wooden) exhibiting up to 20 to 25 % openings in the bottom and optionally in the lateral walls, based on the total surface of the bottom and lateral walls; the step including a regular perforation of the fresh mixture prior to and/or during draining with a wooden stick with a diameter of about 1.5 cm, thereby providing a drained mixture, wherein the weight reduction is about 8 to 12 %, based on the total mass of the fresh mixture;
e. Fermenting the drained mixture in a permeable fermentation container exhibiting 2 to 6 % of openings in the bottom, based on the total surface of the bottom, the step including a regular perforation (e.g. at each turning of the fermentation mass) of the inoculated mixture prior and/or during fermentationwith a wooden stick with a diameter of about 1.5 cm, thereby providing fermented cocoa beans;
f. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
g. Drying the fermented cocoa beans in the sun and/or in heated air.

Another preferred embodiment of the present disclosure is directed to a fermentation process, wherein the process comprises the steps:
a. Providing at least one cocoa pod from bulk cocoa varieties;
b. Pod storing the at least one cocoa pod for up to 4 days (96 hours), thereby providing a pod stored cocoa pod;
c. Separating cocoa beans and cocoa pulp from the stored cocoa pod by hand, thereby providing a fresh mixture of cocoa beans and pulp;
d. Draining off cocoa honey from the fresh mixture of cocoa beans and pulp in a permeable drainage container (plastic or wooden) exhibiting up to 20 to 25 % openings in the bottom and optionally in the lateral walls, based on the total surface of the bottom and lateral walls; the step including a regular perforation of the fresh mixture prior to and/or during draining with a wooden stick with a diameter of about 1.5 cm, thereby providing a drained mixture, wherein the weight reduction is about 8 to 12 %, based on the total mass of the fresh mixture;
e. Fermenting the drained mixture in a permeable fermentation container exhibiting 2 to 6 % of openings in the bottom, based on the total surface of the bottom, the step including a regular perforation (e.g. at each turning of the fermentation mass) of the inoculated mixture prior and/or during fermentationwith a wooden stick with a diameter of about 1.5 cm, the step further including the addition of a desired aromatic substance at the initiation and/or during fermentation, thereby providing aromatized fermented cocoa beans;
f. Determination of the fermentation end by a significant decrease in temperature (e.g. 4-8 °C below the average temperature of fermentation mass), by evaluating sensory quality (low or no acidity, bitterness and/or astringency) and/or by high percentage of openings in the cotyledons; and
g. Drying the aromatized fermented cocoa beans in the sun and/or in heated air.

The present invention allows for the enhanced expression and modification of the aromatic profile of any product based on cocoa beans. This allows for an increase of the commercial value of primary cocoa products (fermented and dried cocoa beans), intermediate products (e.g. cocoa masses or liquors) and end products (e.g. cocoa based food products).

Notably, a fermentation performed according to the present disclosure yields cocoa beans with an utmost degree of consistent high quality with regard to sensory traits. Said high quality is also warranted with every iteration of the fermentation method. Variations in the fermentation process, such as size of fermentation batch, choice of cocoa cultivar or post-harvest conditioning of cocoa beans, fresh bean and pulp characteristics and fermentation duration do not impair said high quality of cocoa beans. This aspect is of great relevance in the making of fermented cocoa beans considering the large extent of inconsistent and unrepeatable cocoa bean quality obtained from each fermentation method known in the prior art.

The objective of the present invention is to obtain cocoa-based food and non-food products, which possess enhanced and diversified aromatic qualities. This is achieved by using as primary ingredient cocoa beans that are fermented according to the claimed process. Food products include products such as cocoa liquor, chocolate, cocoa powder or cocoa butter.

The method of processing cocoa beans as claimed provides 80-100 %, preferably 90-100 % of well-fermented cocoa beans expressing very low or none of the unpleasant flavors acidity, bitterness and/or astringency but express strong intensities of the desired flavors sweet, almond and/or fruity, and the desired aromas spicy and/or floral. Notably, bulk cocoa beans fermented according to this invention also unfold a high degree of these fine flavors and aromas, which is not accomplished via traditional fermentation of bulk cocoa beans. Based on the low degree of unpleasant flavors, a Dutching process of the resulting cocoa products (i.e. treating cocoa products with alkalizing agents) can be circumvented which will make the present disclosure more profitable. Accordingly, cocoa products as used herein may include higher amounts of antioxidants which are usually lost in traditional and/or modern chocolate making due to said Dutching process. With the addition of different aromatic substances, the aromatic profile is further broadened and each desired flavor and/or aroma may be thereupon intensified. In addition to the aromatic profile, the physical appearance can be distinguished from traditionally fermented cocoa beans, i.e. cocoa beans as obtained according to the present disclosure are not slaty and 90-100 % of their cotyledons display apertures. Accordingly, this invention provides a method which allows cocoa beans with a strongly pronounced aromatic profile, wherein undesired flavors are diminished and desired fine flavors are strongly pronounced without the addition of milk or aromatic substances and with low sugar content.

The present invention also provides a process for preparing chocolate and cocoa products comprising roasting the dried cocoa beans fermented as hereinbefore described in accordance with the invention, cracking the shells of said cocoa beans, winnowing to remove the shells and to produce the nibs which are ground to give cocoa liquor. The cocoa liquor may be used to prepare e.g. chocolate from conched cocoa liquor, cocoa butter from pressing of cocoa liquor to extract cocoa butter from the residual cocoa cake, and cocoa powder from pulverization of the cocoa cake. The cocoa powder may thus be used as substrate for chocolate production and other cocoa-based products.

Chocolates made according to the present disclosure express strong and complex aromatic finesse, whereas the cocoa profile may be more limited with regard to cocoa beans from prior art fermentation methods.

Chocolate and/or any other cocoa-based product obtained as described herein express no or low acidity, bitterness and astringency and additionally differ from most traditional chocolates by the presence of sweet, caramel and nutty flavors as well as fruity flavors and floral and/or spicy aromas. Furthermore, a long pleasant aftertaste is characteristic for said chocolate and/or any other cocoa-based product.

Terms as set forth hereinafter are generally to be understood in their common sense unless indicated otherwise.

Where the term "comprising" is used in the present description and claims, it does not exclude other elements. For the purposes of the present invention, the term "consisting of' is considered to be a preferred embodiment of the term "comprising". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless specifically stated otherwise.

Terms like "obtainable" and "obtained" are used interchangeably. This, e.g., means that, unless the context clearly dictates otherwise, the term "obtained" does not mean to indicate that e.g. an embodiment must be obtained by e.g. the sequence of steps following the term "obtained" even though such a limited understanding is always included by the terms "obtained" as a preferred embodiment.

"Cocoa bean" is the seed of any cocoa tree variety (e.g. cocoa tree cultivar). "Wet cocoa beans" are cocoa beans with at least parts of the fresh pulp/mucilage still attached. "Fresh cocoa beans" as used herein are wet cocoa beans directly obtained after opening of pod. For reasons of conciseness, cocoa beans as used herein may also be referred to a mixture of cocoa beans and cocoa pulp, provided that no ambiguity arises in the context.

"Pod" or "cocoa pod" is a mature or ripe cocoa fruit or seed case. As used in the present invention, the pod encloses the cocoa beans and the pulp (or also referred to as mucilage).

"Pulp" as used herein is the soft moist part of a fruit from a plant. "Cocoa pulp" as used herein means the soft moist part surrounding cocoa beans of a cocoa fruit. Pulp is sometimes referred to as "mucilage".

"Cocoa honey" or "cocoa pulp juice" is the liquid portion of cocoa pulp that is gradually released from the fruit after it is cut open. Cocoa honey is typically made by squeezing the pulp of cocoa fruit(s) or by draining the fresh cocoa beans in a permeable container. Cocoa honey usually has a sweet-sour flavor and is rich in sugars, dietary fiber and bioactive compounds such as phenolic compounds including flavonoids.

The term "cocoa honey-based inoculant" as used herein generally refers to an inoculant consisting of or comprising cocoa honey. Unless stated otherwise, the term "cocoa honey-based inoculant" refers to an inoculant consisting of cocoa honey. Unless stated otherwise, the term "cocoa honey-natural leaf-based inoculant" (such as "cocoa honey-banana leaf-based inoculant") refers to an inoculant consisting of cocoa honey and a specific amount of natural leaf (such as banana leaf).

"Drying" or the "drying process" as used herein means drying of cocoa beans during a variable number of hours or days, preferably by exposing the cocoa beans to ambient air, to the sun or to air heated by an energy source (fuel, wood, sunlight, etc.).

"Dutch process" or "Dutching process" is generally referred to a common method in modern chocolate manufacturing, wherein cocoa-based products are treated with alkalizing agents (e.g. carbonates, hydroxides and/or oxides of alkali metals or alkaline earth metals) predominantly in order to reduce the acidity, bitterness and astringency of traditionally fermented cocoa products. A further side effect of the Dutch process is the modification of the natural cocoa color. By "Dutching" of cocoa beans or products thereof, the content of polyphenols are known to decrease strongly.

A "leaf' is a usually green, flattened, lateral structure attached to a stem and functioning as a principal organ of photosynthesis and transpiration in most plants. As used herein "banana leaf' or "banana leaves" refers to the leaf growing on banana plants of the species *Musa acuminata, Musa balbisiana* or any hybrids or polyploids thereof. "Cocoa leaf' or "cocoa leaves" as used herein refers to the leaf growing on cocoa plants of the species *Theobroma cacao L.*

"Fermentation" generally refers to any activity or process involving enzymatic decomposition (digestion) of organic materials by microorganisms. The term "fermentation" encompasses both anaerobic and aerobic processes, as well as processes involving a combination or succession of one or more anaerobic and/or aerobic stages. In this invention, "fermentation" of cocoa beans and pulp preferably refers to the combination of one or more concurrently proceeding anaerobic and aerobic stages.

"Spontaneous fermentation" as used herein refers to a fermentation initiated by microorganism naturally present in and/or unconsciously introduced into the organic material (herein: cocoa beans and cocoa pulp) at the start and/or during fermentation.

The "fermentation mass" is the mixture to be fermented comprising cocoa beans, cocoa pulp, cocoa honey-based inoculant and if present, at least one aromatic substance.

"Permeable container" as used herein is any container permitting exchange and draining of fluids, gases and/or solids. Said container can be of any kind and size of box, basket or any rotating device (drum, cylinder, conical, etc.) as long as it permits good exchange and exit of fluids, gases and/or solids. In this invention, any of box- or basket-type container exhibits openings in the bottom with or without openings in the lateral walls.

"Permeable draining container" as used herein refers to a permeable container applied for the drainage of cocoa beans.

"Permeable fermentation container" as used herein refers to a permeable container applied for the fermentation of cocoa beans.

"Aroma" as used herein preferably is an odor that refers to as a smell and is sensed by receptors in the nose. "Flavor" as used herein preferably refers to a combined sense of smell and taste. In this invention, spicy and floral are perceived as aromas, whereas sweet, nutty, almond, fruity, astringent, acidic and bitter are perceived as flavors. Among these, spicy and floral aromas are also referred to as "fine aromas" and "fine flavors" are directed to sweet, nutty, almond and fruity flavors, whereas astringent, acidic and bitter are referred to "undesired flavors", "unpleasant flavors" or "basic flavors".

"Fine cocoa", "fine cocoa bean", "flavor cocoa" or "flavor cocoa bean" generally refer to fermented cocoa beans characterized by enhanced fine flavors and fine aromas and reduced undesired flavors with a rich and balanced cocoa/chocolate base. In general, fine or flavor cocoa beans are produced from the cocoa varieties Trinitario, Nacional or Criollo.

As used herein, "bulk cocoa", "bulk cocoa bean", "ordinary cocoa" or "ordinary cocoa bean" refers to cocoa varieties expressing undesired flavors (acidity, bitterness and astringency)and low or no fine flavors and fine aromas with a rich cocoa/chocolate base. Bulk or ordinary cocoa beans typically stem from the Forastero cocoa genetic group though some Forastero varieties, such as "Nacional" from Ecuador and "Chuncho" from Peru are known to produce fine cocoa.

"Roasting" or the "roasting process" as used herein refers to the roasting of cocoa beans during a variable number of minutes, preferably by exposing the cocoa beans to air heated by an energy source (fuel, wood, sunlight, etc.). In this invention, "roasting" takes place at temperatures between 100 to 120 °C during 20 to 30 minutes, wherein more intense fruity flavors and/or floral and/or spicy aromas of the cocoa beans are preserved while nearly maintaining the original polyphenol content.

"Aromatic" as used herein relates to a distinctive pleasant smell and/or taste.

"Aromatic substance" as used herein is any substance that modifies the flavor profile of fermented and dried cocoa beans when added to wet cocoa beans before, at the initiation, during or at the end of the cocoa bean fermentation process, wherein adding at the end includes the early drying stages of the fermented cocoa beans. Aromatic substances include substances perceived by tasting, substances perceived by smelling, and substances perceived by tasting and by smelling. Aromatic substances include flavorings, aromas and mixtures thereof. Enzymes and microorganisms are not considered as aromatic substances in the meaning of the present invention. As used herein, the plural of "aromatic substance", "aromatic substances", means one single aromatic substance or a plurality of aromatic substances.

A "natural aromatic substance" as used herein is an aromatic substance which occurs in nature and can therefore, if necessary, be obtained from natural substances by physical, microbiological and/or enzymatic processes. Included are also whole plants and parts of a plant. "Natural aromatic substance" include substances perceived by tasting, substances perceived by smelling, and mixtures thereof.

A "nature-identical aromatic substance" as used herein is an aromatic substance which occurs in nature, but is produced artificially by synthesis or isolated through a chemical process. "Nature-identical aromatic substance" include substances perceived by tasting, substances perceived by smelling, and mixtures thereof.

An "artificial aromatic substance" as used herein is an aromatic substance which does not occur in nature and can therefore not be isolated from any natural material. "Artificial aromatic substance" include substances perceived by tasting, substances perceived by smelling, and mixtures thereof.

"Substance" is anything which has mass and occupies space.

A "semi-finished product", a "half-finished product" or an "intermediate product" is a product that is not sold as such to the consumers, but is rather modified or further processed before being sold.

A "finished product" or an "end product" is any product that is directly sold to a customer/consumer. Such end-products include also chocolate bars with high cocoa content and other cocoa-containing food products produced by chocolate and confectionary industries or by artisans, such as pastries, cakes, desserts, ice-creams and chocolate "bon-bons" such as "pralines" and "ganaches".

"Cocoa liquor" or "cocoa mass" is an often smooth liquid when heated above 35°C, made of roasted, de-shelled (or "winnowed") and ground cocoa beans. As the roasted cocoa nibs from which it is produced, it contains cocoa solids and approximately 50 % cocoa butter.

"Nibs" or "cocoa nibs" refers to pieces of cocoa beans without shell obtained from "winnowing" or "de-shelling" of fermented, dried and/or roasted cocoa beans with shell.

In this invention, the term "chocolate" comprises standard dark chocolate, milk chocolate as well as substitute chocolates such as used in compounds, couvertures or ice-cream coatings. Standard dark chocolates are generally obtained by mixing cocoa liquor with cocoa butter and sugar, followed by refining, conching and tempering. Milk chocolates are prepared in a similar way but with the addition of milk. The cocoa butter may be partially or totally replaced by cocoa butter replacements such as stearines, coconut oil, palm oil, butter or any mixture thereof. Chocolates prepared in this way are also called substitute chocolates.

### EXPERIMENTAL SECTION

In the following, the present invention is illustrated in more detail by way of Examples. However, it is understood that the scope of protection is only determined by the attached claims, not being restricted to any of the following Examples. The following Examples are set forth to assist in understanding the invention and should not be construed as specifically limiting the invention described and claimed herein. Such variations of the invention, including the substitution of all equivalents now known or later developed, that would be within the purview of those skilled in the art, and changes in formulation or changes in experimental design, are to be considered to fall within the scope of the invention incorporated herein.

As follows, "comparative examples" are directed to prior art and/or traditional fermentation methods (comparative examples 1-7, 9 and 10) and chocolate prepared from prior art and/or traditionally fermented cocoa beans (comparative example 8). The sensory traits evaluated for cocoa beans and chocolate prepared via comparative examples serve as references for the sensory evaluation of cocoa beans and chocolate obtained according to the present disclosure. Therefore, comparative examples are excluded from the scope of the present disclosure.

"Examples A-K" are directed to cocoa beans and chocolate obtained by the method according to the present disclosure.

Cocoa honey-based inoculant used in the following Examples consist of cocoa honey, unless stated otherwise. Clear cocoa honey resulting from a draining step was collected as obtained and processed by centrifugation for the preparation of the cocoa honey-based inoculant.

Fermented cocoa beans and chocolates obtained in the following examples were each evaluated by three experts with extensive experience in sensory evaluation of cocoa beans and chocolate.

**Comparative Example 1 - Amelonado cocoa varieties.** Traditional fermentation was performed with cocoa beans from Amelonado-type cocoa varieties ("Para" and "Maranhão"). After the cocoa pods were manually opened, 17 kg of a fresh mixture of cocoa beans and cocoa pulp was placed in a 22x30x30 cm polystyrene box with 3 % of circular openings in the bottom, based on the total surface of the bottom. The average diameters of the circular openings were 0.8 to 1.2 cm. The fermentation mass was, for the first time, turned about 36 hours after the initiation of fermentation. Thereafter, the turning was performed at a regular interval of about 24 hours. The fermentation period was about 168 hours (with a temperature decrease of from about 42 °C to 40 °C).

Fermented cocoa beans were sun-dried for about 144 hours on top of a wooden surface.

Evaluated sensory traits and preferences of the obtained cocoa beans are presented in Table 1.

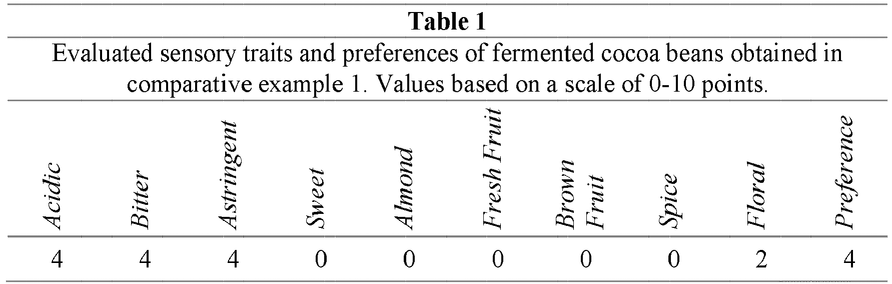

**Comparative Example 2 - Cocoa variety mixture.**Traditional fermentation was performed with cocoa beans from the cocoa variety mixture consisting of 8 different cocoa varieties (including "CEPEC 2008", "Amelonado Para", "Amelonado Maranhão", "PS13/19", "PH16", "TSH1188", "TSH565" and "CCN10").

After the cocoa pods were manually opened, 17 kg of a fresh mixture of cocoa beans and cocoa pulp was placed in a 22x30x30 cm polystyrene box with 3 % of circular openings in the bottom, based on the total surface of the bottom. The average diameters of the circular openings were 0.8 to 1.2 cm. The fermentation mass was, for the first time, turned about 36 hours after the initiation of fermentation. Thereafter, the turning was performed at a regular interval of about 24 hours. The fermentation period was about 168 hours (with a temperature decrease of from about 42 °C to 40 °C).

The fermentation period was 144 hours (with a temperature decrease of from about 43 °C to 41 °C).

Evaluated sensory traits and preferences of the obtained cocoa beans are presented in Table 2.

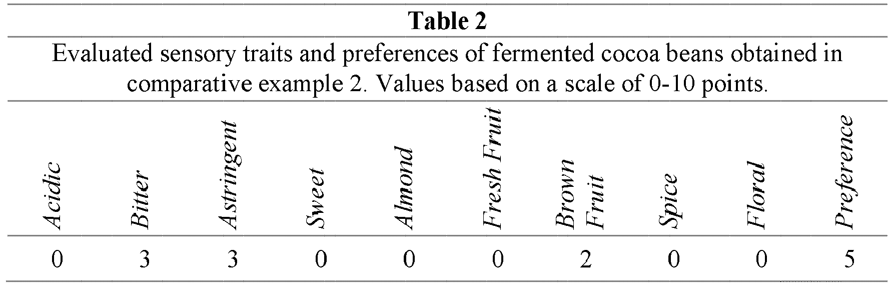

**Comparative Example 3 - Draining and partial drying.** Cocoa beans of the cocoa variety mixture of 8 different Brazilian commercial cocoa varieties ("CEPEC 2008", "Amelonado Para", "Amelonado Maranhão", "PH16", "PS13/19", "TSH1188", "TSH565" and "CCN10") were applied.

20 kg of a fresh mixture of cocoa beans and cocoa pulp were drained for about 20 hours in 30x50x30 cm plastic fruit boxes exhibiting 25 % of openings in the lateral walls and 25 % of openings in the bottom, based on the total surface of lateral walls and bottom, respectively. The openings were rectangular-shaped (0.5x6 cm).

The drained mixture was partially dried by bean spreading on wooden boards in the sun for about 3-4 hours. During both steps, draining and bean spreading, a weight reduction of 25 weight-% was obtained, based on the total mass of the fresh mixture of cocoa beans and cocoa pulp.

Fermentation was performed in a 20x30x30 cm polystyrene box with 3 % of circular openings in the bottom, based on the total surface of the bottom. The average diameters of the circular openings were 0.8 to 1.2 cm. The fermentation mass was turned at an interval of about 24 hours. The duration of the fermentation was about 120 hours (with a temperature decrease of from about 43 °C to 32 °C).

Fermented cocoa beans were sun-dried for about 144 hours on top of a wooden surface.

Evaluated sensory traits and preferences of the obtained cocoa beans are presented in Table 3.

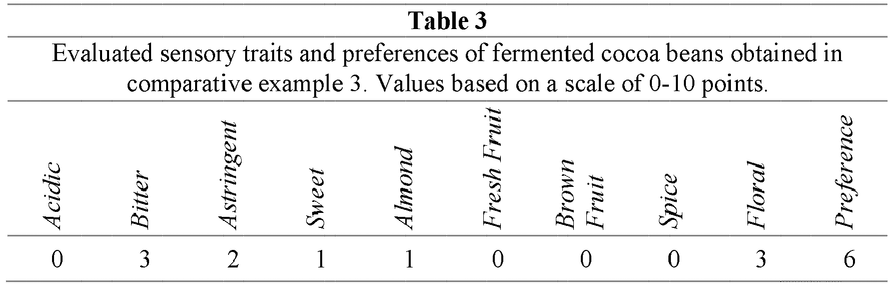

**Comparative Example 4 - Draining.** A similar fermentation method as described in comparative example 3 was applied, wherein the fermentation box exhibited 2 % of circular openings in the lateral walls, based on the total surface of the lateral walls. The circular openings exhibited average diameters of 0.8-1.2 cm.

During the draining step, a weight reduction of 7.5 weight-% was obtained, based on the total mass of the fresh mixture of cocoa beans and cocoa pulp.

The fermentation period was about 144 hours (with a temperature decrease of from about 49 °C to 37 °C).

Evaluated sensory traits and preferences of the obtained cocoa beans are presented in Table 4.

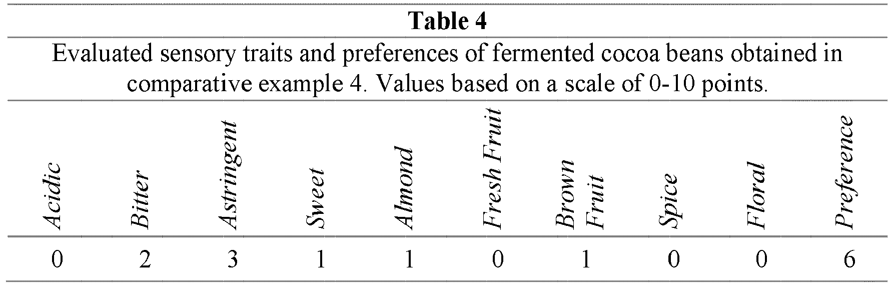

**Comparative Example 5- Amelonado cocoa variety.**20 kg of a fresh mixture of cocoa beans and cocoa pulp of the cocoa variety "Amelonado Para" was filled in a polystyrene box of 25x35x35 cm with 3 % of circular openings in the bottom, based on the total surface of the bottom. The average diameters of the circular openings were 0.8 to 1.2 cm. The fermentation mass was turned at about 36 hours, 60 hours, 84 hours, 108 hours and 132 hours after initiation of the fermentation process. The duration of the fermentation was about 144 hours.

Fermented cocoa beans were sun-dried for about 144 hours on top of a wooden surface.

Evaluated sensory traits and preferences of the obtained cocoa beans are presented in Table 5.

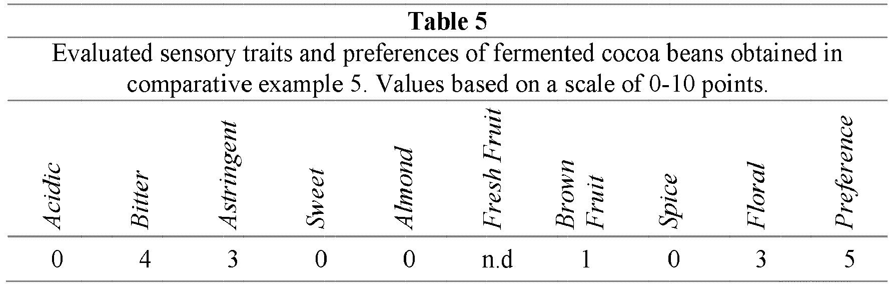

**Comparative Example 6- Heap fermentation.** The heap fermentation as presented herein is a traditional fermentation method commonly practiced in Africa.Heap fermentation was performed using cocoa beans of the cocoa variety mixture of 8 different Brazilian commercial cocoa varieties ("CEPEC 2008", "Amelonado Para", "Amelonado Maranhão", "PH16", "PS 13/19", "TSH1188", "TSH565" and "CCN10").

50 kg of a fresh mixture of cocoa beans and cocoa pulp was gathered to a heap on banana leaves placed on a ground with an area of approximately 35x60x35 cm. The heap of cocoa beans was thereafter covered with five layers of banana leaves. The heap of cocoa beans was turned once after about 72 hours after initiation of fermentation. The fermentation period was about 120 hours (about 41 °C).

Fermented cocoa beans were sun-dried for about 144 hours on top of a wooden surface.

Evaluated sensory traits and preferences of the obtained cocoa beans are presented in Table 6.

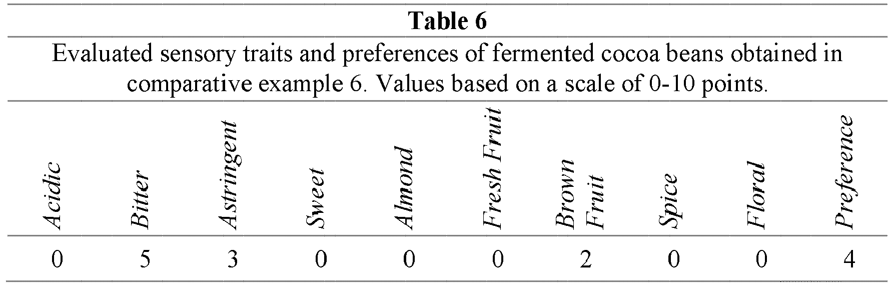

**Comparative Example 7- Nylon bag fermentation.** The nylon bag fermentation as presented herein is a traditional fermentation method commonly practiced in Ecuador. Nylon bag fermentation was performed using cocoa beans of the cocoa variety "Amelonado Para".

The general procedure is as follows. 35 kg of a fresh mixture of cocoa beans and cocoa pulp were drained for about 18 hours in a 30x50x30 cm plastic fruit boxes exhibiting 25 % of openings in the lateral walls and 25 % of openings in the bottom, based on the total surface of lateral walls and bottom, respectively. The openings were rectangular-shaped (0.5x6 cm). During the draining step, a weight reduction of 14 weight-% was obtained, based on the total mass of the fresh mixture of cocoa beans and cocoa pulp.

The drained mixture was partially dried by bean spreading on wooden boards in the sun for about 3 hours. During both steps, draining and bean spreading, a weight reduction of 25 weight-% was obtained, based on the total mass of the fresh mixture of cocoa beans and cocoa pulp.

The partially dried mixture was gathered in a nylon bag forming a shape with a size of about 30x40x35 cm. The nylon bag containing the drained mixture was shaken for about 3 minutes in a regular interval of about 24 hours.

Fermented cocoa beans were sun-dried for about 144 hours on top of a wooden surface.

Treatment 7.1 was performed according to the general procedure, however without the partial drying step, and wherein the drained mixture was fermented in a nylon bag. The fermentation period was about 144 hours (with a temperature decrease of from about 42 °C to 39 °C).

Treatment 7.2 was performed according to the general procedure as described above. The fermentation period was about 120 hours (with a temperature decrease of from about 38 °C to 32 °C).

Evaluated sensory traits and preferences of the obtained cocoa beans are presented in Table 7.

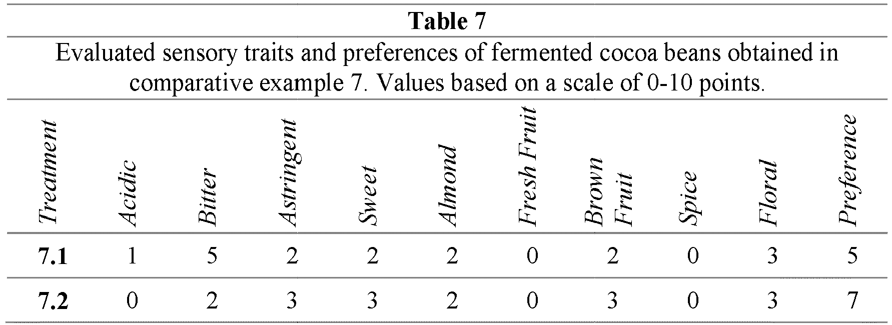

**Comparative Example 8- Chocolate from fermented cocoa beans.** Cocoa beans of the cocoa variety "Sca6 Hybrids" were treated similarly as described in Comparative Example 1. The obtained fermented and dried cocoa beans were further processed to chocolate containing 70 % of cocoa mass and 30 % of sugar, as follows.

Fermented and dried cocoa beans obtained in the respective treatment were roasted in an "Ethik" roaster at 120 °C for 20 min and winnowed, wherein roasted cocoa nibs were obtained. Sugar was added to the roasted cocoa nibs in an amount of 30 weight-%, based on the total mass of the roasted cocoa nibs. The obtained mixture of sugar and roasted cocoa nibs were ground and conched in a chocolate melanger of the model "Spectra 11" at 55 °C for 24 hours, wherein sweetened cocoa liquor was obtained. Sweetened cocoa liquor was successively tempered in accordance with the order of 45 °C, 28 °C and 32 °C. Chocolate was obtained in the form of a bar upon moulding of the tempered mass.

Evaluated sensory traits and preferences of the obtained cocoa beans are presented in Table 8.

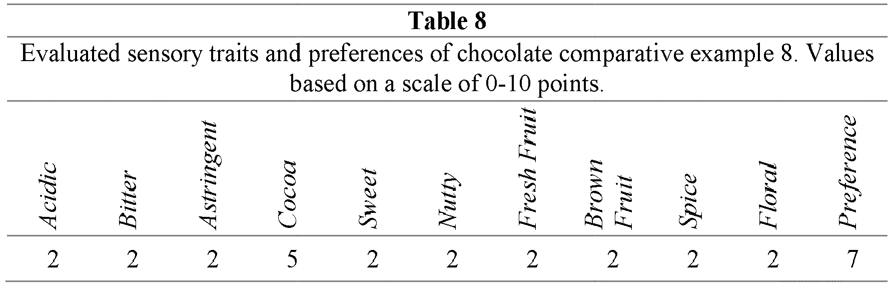

**Comparative Example 9.** Cocoa beans of the cocoa variety mixture consisting of 8 different cocoa varieties (including "Amelonado Para", "Amelonado Maranhão", "PS13/19", "IMC67xSca6 hybrid", "PH15", "Sca6 hybrid population", "SJ02" and "CCN10") were applied.

***General procedure.*** 35 kg of a fresh mixture of cocoa beans and cocoa pulp were drained for about 20 hours in 30x50x30 cm plastic fruit boxes exhibiting 25 % of openings in the lateral walls and 25 % of openings in the bottom, based on the total surface of lateral walls and bottom, respectively. The openings were rectangular-shaped (0.5x6 cm).

After the cocoa honey-based inoculant was added to the drained mixture in an amount of 2.0 weight-%, based on the total mass of the drained mixture, the inoculated mixture was subjected to fermentation. The inoculated mixture was placed in a 20x30x25 cm polystyrene box with 5 % of circular openings in the bottom, based on the total surface of the bottom. The circular openings exhibited average diameters of 0.8-1.2 cm. The fermentation mass was turned every 24 hours and the fermentation temperature of the fermentation mass was regularly monitored every 12 hours. The termination of fermentation was determined by the decrease of temperature of the fermentation mass of from approximately 45 °C to 40 °C (9.1: about 48 hours, 9.2: about 72 hours)

Fermented cocoa beans were sun-dried for about 144 hours on top of a wooden surface.

***Treatment 9.1** - **Draining and inoculation.*** The general procedure was applied as described. The draining step resulted in a weight loss of 7.5 weight-%, based on the total mass of fresh cocoa beans and cocoa pulp.

***Treatment 9.2*** - ***Draining, inoculation and perforation of the inoculated mixture.*** The general procedure was applied with the following complementation. The draining step resulted in a weight loss of 7.5 weight-%, based on the total mass of fresh cocoa beans and cocoa pulp. After the inoculation step, the inoculated mixture was perforated with a wooden stick, obtaining a perforated fermentation mass, wherein the diameter of each perforation was of the size of about 1.5 cm and the perforations were about 10 to 15 cm apart from each other. The perforation step was iterated after every turning of the fermentation mass (24 hours).

Evaluated sensory traits and preferences of the obtained cocoa beans are presented in Table 9.

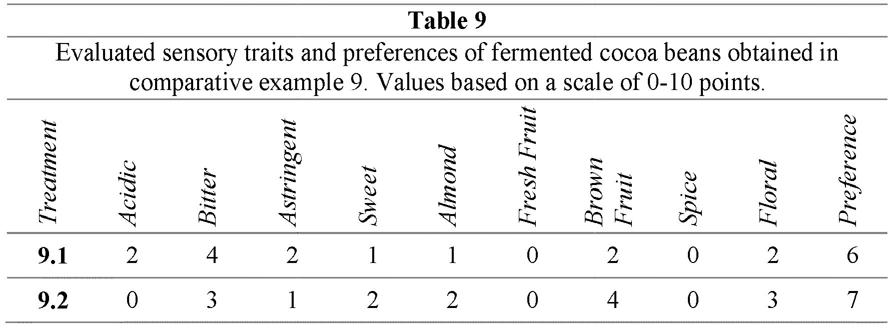

**Comparative Example 10.** Cocoa beans of the cocoa variety mixture consisting of three (3) different cocoa varieties ("Amelonado Maranhao", "Amelonado Para" and "Amelonado Parazinho") were applied.

***General procedure.*** 16 kg of a fresh mixture of cocoa beans and cocoa pulp were placed in a 30x50x30 cm polystyrene box exhibiting 25 % of openings in the bottom, based on the total surface of lateral walls and bottom, respectively. The openings were circular-shaped with a diameter of 0.8 to 1.2 cm. The fresh mixture was drained for about 18 hours resulting in a weight loss of 5 to 8 weight-%, based on the total weight of the fresh mixture of cocoa beans and cocoa pulp.

***Treatment 10.1 -Draining.*** The drained mixture was fermented in the same polystyrene box used for the draining. The fermentation mass was firstly turned 24 hours after initiation of the fermentation and then every 24 hours thereafter. The fermentation temperature of the fermentation mass was regularly monitored every 12 hours. The termination of fermentation was determined by the decrease of temperature of the fermentation mass of from approximately 40 °C to 30 °C (about 96 hours) and from approximately 42 °C to 36 °C (about 96 hours).Fermented cocoa beans were sun-dried for about 168 to 360 hours on top of a wooden surface.

***Treatment 10.2** - **Draining and inoculation.*** The cocoa honey-based inoculant was added to the drained mixture in an amount of 4.0 weight-%, based on the total mass of the drained mixture.

The inoculated mixture was fermented in the same polystyrene box used for the draining. The fermentation mass was firstly turned 24 hours after initiation of the fermentation and then every 24 hours thereafter. The fermentation temperature of the fermentation mass was regularly monitored every 12 hours. The termination of fermentation was determined by the decrease of temperature of the fermentation mass of from approximately 40 °C to 30 °C (about 96 hours) and from approximately 42 °C to 36 °C (about 96 hours).Fermented cocoa beans were sun-dried for about 168 to 360 hours on top of a wooden surface.

Evaluated sensory traits and preferences of the obtained cocoa beans are presented in Table 10.

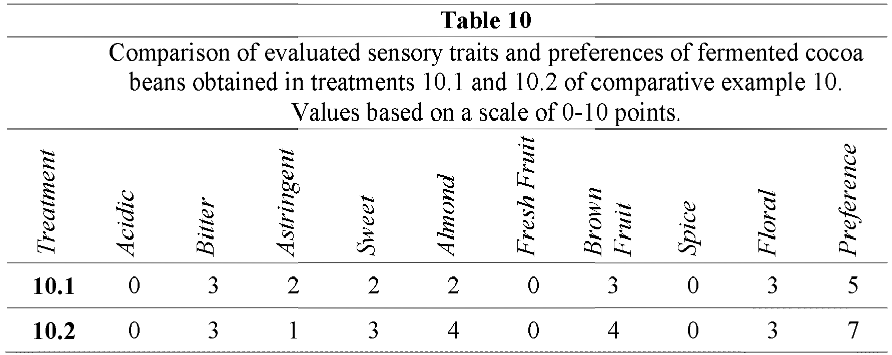

**Example A.** Cocoa beans of the cocoa variety mixture consisting of 8 different cocoa varieties (including "Amelonado Para", "Amelonado Maranhão", "PS13/19", "IMC67xSca6 hybrid", "PH15", "Sca6 hybrid population", "SJ02" and "CCN10") were applied.

***General procedure.*** 35 kg of a fresh mixture of cocoa beans and cocoa pulp were drained for about 20 hours in 30x50x30 cm plastic fruit boxes exhibiting 25 % of openings in the lateral walls and 25 % of openings in the bottom, based on the total surface of lateral walls and bottom, respectively. The openings were rectangular-shaped (0.5x6 cm).

After the cocoa honey-based inoculant was added to the drained mixture in an amount of 2.0 weight-%, based on the total mass of the drained mixture, the inoculated mixture was subjected to fermentation. The inoculated mixture was placed in a 20x30x25 cm polystyrene box with 5 % of circular openings in the bottom, based on the total surface of the bottom. The circular openings exhibited average diameters of 0.8-1.2 cm. The fermentation mass was turned every 24 hours and the fermentation temperature of the fermentation mass was regularly monitored every 12 hours. The termination of fermentation was determined by the decrease of temperature of the fermentation mass of from approximately 45 °C to 40 °C (A1: about 120 hours, A2: about 72 hours)

Fermented cocoa beans were sun-dried for about 144 hours on top of a wooden surface.

The following treatments Aland A2further complemented the general procedure by a perforation method. The perforation of the respective cocoa mixture by means of a wooden stick was performed prior to the inoculation step ("perforation of the drained mixture") and/or during the fermentation step ("perforation of the inoculated mixture") of the general procedure.

***Treatment A1- Perforation of the fresh mixture, draining and inoculation.*** The general procedure was applied with the following complementation. Prior to initiation of the inoculation step, the fresh mixture of cocoa beans and cocoa pulp was perforated with a wooden stick, obtaining a perforated fresh mixture of cocoa beans and cocoa pulp, wherein the diameter of each perforation was of the size of about 1.5 cm and the perforations were about 10 to 15 cm apart from each other. During the draining a weight loss of 13.5 weight-%, based on the total mass of fresh cocoa beans and cocoa pulp, was obtained.

***Treatment A2- Perforation of the fresh mixture, draining, inoculation and perforation of the inoculated mixture.*** The general procedure was applied with the following complementation. Prior to initiation of the inoculation step, the fresh mixture of cocoa beans and cocoa pulp was perforated with a wooden stick, obtaining a perforated fresh mixture of cocoa beans and cocoa pulp, wherein the diameter of each perforation was of the size of about 1.5 cm and the perforations were about 10 to 15 cm apart from each other. During the draining a weight loss of 13.5 weight-%, based on the total mass of fresh cocoa beans and cocoa pulp, was obtained. After the inoculation step, the inoculated mixture was perforated with a wooden stick, obtaining a perforated fermentation mass, wherein the diameter of each perforation was of the size of about 1.5 cm and the perforations were about 10 to 15 cm apart from each other. The perforation step was iterated after every turning of the fermentation mass (24 hours).

Evaluated sensory traits and preferences of the obtained cocoa beans are presented in Table A in comparison to unperforated cocoa beans (10.1) and perforated inoculated mixture (10.2) obtained in Comparative Example 10.

The sensory traits for treatment 10.1 (unperforated cocoa beans) shows that without perforating either the fresh mixture of cocoa beans and cocoa pulp or the inoculated mixture, the obtained cocoa beans exhibit acidic, bitter and astringent flavors, i.e. flavors that are not preferred in cocoa beans. The experts perceived no sufficient expression of the preferred flavors and aromas (sweet, almond, fresh fruit, brown fruit, spicy and floral). The three experts assessed 6 of 10 possible points, i.e. a moderate to low preference.

According to the experts, the sensory properties of cocoa beans benefit from the increase of perforation of the cocoa mass during the draining step and/or the fermentation mass, allowing a greater exposure to air.

In contrast to treatment 10.1, cocoa beans obtained in treatment 10.2 (perforated inoculated mixture) expressed no acidic flavor and lower bitterness and astringency. The sweet, almond and brown fruit flavors, and floral aroma were slightly intensified, resulting in a slightly elevated preference (7 of 10 points).

In contrast to treatments 10.1 and 10.2, cocoa beans obtained in treatment A1 (perforated fresh mixture of cocoa beans and cocoa pulp) expressed lower acidic and bitter flavors. Astringency was similarly evaluated as in treatment 10.2. Compared to treatment 10.2, the experts perceived higher expression of almond, fresh fruit and brown fruit flavors, and in particular of floral aroma for treatment A1. An overall slightly higher preference (8 of 10 points) was evaluated.

In contrast to treatments 10.1, 10.2 and A1, cocoa beans obtained in treatment A2(perforated inoculated mixture and perforated fresh mixture of cocoa beans and cocoa pulp) exhibited less or no acidity, bitterness and astringency. The experts perceived slightly stronger sweetness and slightly lower floral aroma. Among these treatments, the experts assessed the highest preference (9 of 10 points) for A2.

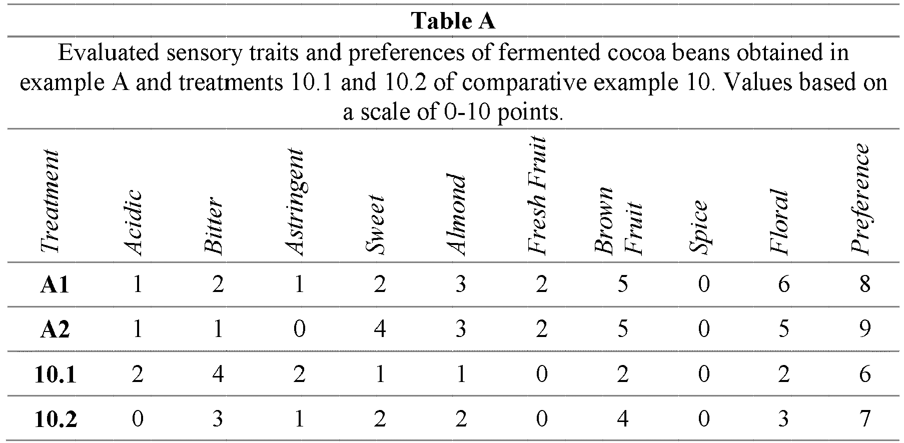

**Example B.** Cocoa beans of the cocoa variety mixture consisting of 8 different cocoa varieties (including "Amelonado Para", "Amelonado Maranhão", "PS13/19", "IMC67xSca6 hybrid", "PH15", "Sca6 hybrid population", "SJ02" and "CCN10") were applied in the fermentation method.

***General procedure.*** 35 kg of a fresh mixture of cocoa beans and cocoa pulp were placed in a 30x50x30 cm plastic fruit box exhibiting 25 % of openings in the lateral walls and 25 % of openings in the bottom, based on the total surface of lateral walls and bottom, respectively. The openings were rectangular-shaped (0.5x6 cm). The fresh mixture of cocoa beans and cocoa pulp mixture was perforated with a wooden stick, obtaining a perforated fresh mixture, wherein the diameter of each perforation was of the size of about 1.0 to 2.0 cm and the perforations were about 10 to 15 cm apart from each other. Thereafter, the perforated fresh mixture was drained for about 20 hours resulting in a weight loss of 10 to 12 weight-%, based on the total mass of the fresh mixture of cocoa beans and cocoa pulp.

The cocoa honey-based inoculant was added to the drained mixture in an amount of 2.0 weight-%, based on the total mass of the drained mixture. The inoculated mixture was perforated with a wooden stick, obtaining a perforated fermentation mass, wherein the diameter of each perforation was of the size of about 1.5 cm and the perforations were about 10 to 15 cm apart from each other. The perforation step was iterated after every turning of the fermentation mass (24 hours). The fermentation temperature of the fermentation mass was regularly monitored every 12 hours. The termination of fermentation was determined by the decrease of temperature of the fermentation mass of from approximately 40 °C to 33 °C (about 96 hours).Fermented cocoa beans were sun-dried for about 144 hours on top of a wooden surface.

***Treatment B1* - *Perforation of the fresh mixture, draining, inoculation, perforated inoculated mixture, fermentation box with openings in the lateral walls.*** The general procedure was applied. The termination of fermentation was determined by the decrease of temperature of the fermentation mass of from approximately 40 °C to 28 °C (about 96 hours).

***Treatment B2* - *Perforation of the fresh mixture, draining, inoculation, perforated inoculated mixture, fermentation box with openings in the lateral walls covered with banana leaves for 24 hours.*** The general procedure was applied, wherein the internal lateral walls of the fermentation box were covered with one layer of banana leaves prior to inoculation. The banana leaves were present in the fermentation box for about 24 hours after the initiation of fermentation. The termination of fermentation was determined by the decrease of temperature of the fermentation mass of from approximately 41 °C to 36 °C (about 72 hours).

***Treatment B3* - *Perforation of the fresh mixture, draining, inoculation, perforated inoculated mixture, fermentation box with openings in the lateral walls covered with banana leaves for 48 hours.*** The general procedure was applied, wherein the internal lateral walls of the fermentation box were covered with one layer of banana leaves prior to inoculation. The banana leaves were present in the fermentation box for about 48 hours after the initiation of fermentation. The termination of fermentation was determined by the decrease of temperature of the fermentation mass of from approximately 42 °C to 30 °C (about 96 hours).

***Treatment B4* - *Perforation of the fresh mixture, draining, inoculation, perforated inoculated mixture, fermentation box with openings in the lateral walls covered with banana leaves for 72 hours.*** The general procedure was applied, wherein the internal lateral walls of the fermentation box were covered with one layer of banana leaves prior to inoculation. The banana leaves were present in the fermentation box for about 72 hours after the initiation of fermentation. The termination of fermentation was determined by the decrease of temperature of the fermentation mass of from approximately 41 °C to 30 °C (about 96 hours).Evaluated sensory traits and preferences of the obtained cocoa beans are presented in Table B.

Cocoa beans of the treatments B1 (fermentation box with uncovered openings in the lateral walls), B2 (fermentation box with openings in the lateral walls covered with banana leaves for 24 hours), B3 (fermentation box with openings in the lateral walls covered with banana leaves for 48 hours) and B4 (fermentation box with openings in the lateral walls covered with banana leaves for 72 hours) expressed no acidity.

The experts noticed a general trend, wherein bitterness was perceived in accordance with the duration of banana leaves covering the lateral openings of the fermentation box. The longer the banana leaves were present during the fermentation, the lower were the intensities of bitterness (B 1 ∼ B2 >B3 >B4).

On the other hand, with regard to B1, the experts noticed a similarly reduced degree of astringency and spiciness regardless of the duration of the coverage of the fermentation box by banana leaves.

An opposite trend was perceived for the intensities of the fine flavors and aromas sweet, brown fruit and floral. The longer the banana leaves were present during the fermentation, the stronger were these flavors perceived, obtaining cocoa beans of the highest intensities of sweetness, brown fruit flavor and floral aroma for treatment B4.

The experts perceived no significant modifications in almond flavors, whereas a general reduction of fresh fruit flavors were noticed in B2-B4. The three experts graded cocoa beans fermented the longest in the presence of banana leaves with the highest possible points (10 of 10 points), whereas cocoa beans fermented in the presence of shorter coverage periods (24 hours and 48 hours) were slightly less preferred (9 of 10 points). Cocoa beans fermented in boxes without the coverage by banana leaves were the least preferred (8 of 10 points).

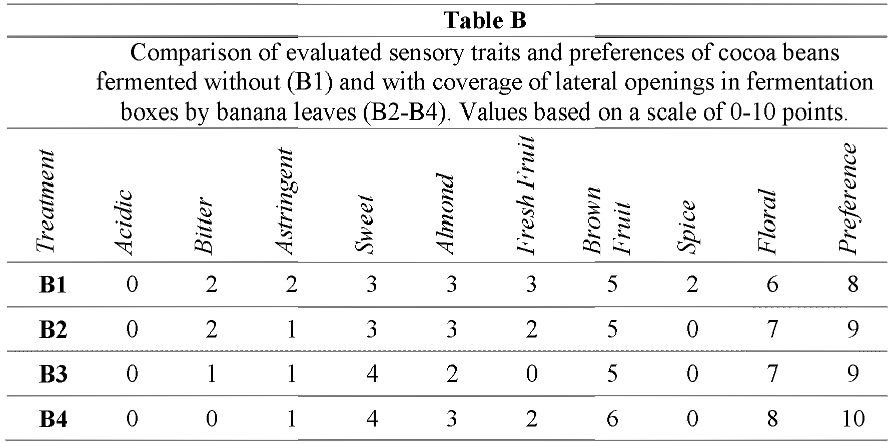

**Example C** - **Large-scale fermentation, perforation of the fresh mixture, draining, inoculation and perforation of the inoculated mixture.** Cocoa beans of the cocoa variety mixture consisting of 8 different cocoa varieties (including "Amelonado Para", "Amelonado Maranhão", "PS13/19", "IMC67xSca6 hybrid", "PH15", "Sca6 hybrid population", "SJ02" and "CCN10") were applied.

140 kg of a fresh mixture of cocoa beans and cocoa pulp were placed in a 60x70x60 cm wooden box exhibiting 3 % of linear openings (60x0.4 cm) in the bottom, based on the total surface of the bottom.

Prior to initiation of the draining step, the fresh mixture of cocoa beans and cocoa pulp was perforated with a wooden stick, obtaining a perforated fresh mixture of cocoa beans and cocoa pulp, wherein the diameter of each perforation was of the size of about 1.5 cm and the perforations were about 10 to 15 cm apart from each other. During the draining (about 20 hours) a weight loss of 14 weight-%, based on the total mass of fresh cocoa beans and cocoa pulp, was obtained.

The cocoa honey-based inoculant was added to the drained mixture in an amount of 2.0 weight-%, based on the total mass of the drained mixture.

After the inoculation step, the inoculated mixture was perforated with a wooden stick, obtaining a perforated fermentation mass, wherein the diameter of each perforation was of the size of about 1.5 cm and the perforations were about 10 to 15 cm apart from each other. The perforation step was iterated after every turning of the fermentation mass (24 hours).

The fermentation temperature of the fermentation mass was regularly monitored every 12 hours. The termination of fermentation was determined by the decrease of temperature of the fermentation mass of from approximately 41 °C to 36 °C (about 96 hours).Fermented cocoa beans were sun-dried for about 144 hours on top of a wooden surface. Evaluated sensory traits and preferences of the obtained cocoa beans are presented in Table C.

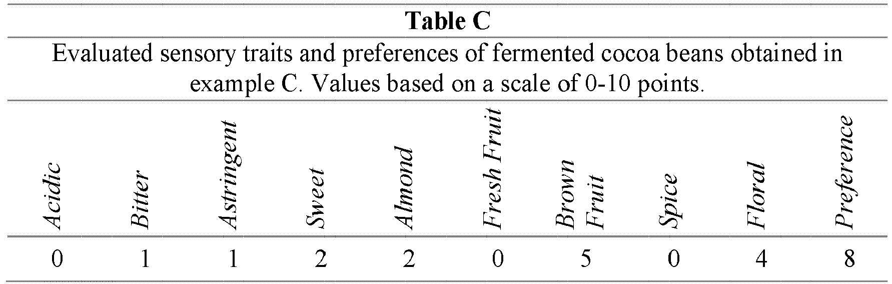

**Example D- Perforation of the fresh mixture, draining, inoculation with cocoa honey-based inoculant, perforation of the inoculated mixture, fermentation box covered with banana leaves.** Fermentation using cocoa honey-based inoculant. Cocoa beans of the cocoa variety mixture consisting of 8 different Brazilian commercial cocoa varieties ("CEPEC 2008", "Amelonado Para", "Amelonado Maranhão", "PH16", "PS13/19", "TSH1188", "TSH565" and "CCN10") were applied.

35 kg of a fresh mixture of cocoa beans and cocoa pulp were placed in a 30x50x30 cm plastic fruit boxes exhibiting 25 % of openings in the lateral walls and 25 % of openings in the bottom, based on the total surface of lateral walls and bottom, respectively. The openings were rectangular-shaped (0.5x6 cm).

The plastic fruit box was placed on top of two layers of banana leaves and was covered with five layers of banana leaves. The fresh mixture of cocoa beans and cocoa pulp mixture was perforated with a wooden stick, obtaining a perforated fresh mixture, wherein the diameter of each perforation was of the size of about 1.5 cm and the perforations were about 10 to 15 cm apart from each other.

Thereafter, the perforated fresh mixture was drained for about 20 hours resulting in a weight loss of 13 weight-%, based on the total weight of the fresh mixture of cocoa beans and cocoa pulp.

The cocoa honey-based inoculant was added to the drained mixture in an amount of 2.0 weight-%, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 15 cm apart from each other. The perforation step was iterated after every turning of the fermentation mass (48 hours). The fermentation temperature of the fermentation mass was regularly monitored every 12 hours. The termination of fermentation was determined by the decrease of temperature of the fermentation mass of from approximately 40 °C to 33 °C (about 96 hours).Fermented cocoa beans were sun-dried for about 144 hours on top of a wooden surface. Evaluated sensory traits and preferences of the obtained cocoa beans are presented in Table D.

The experts perceived no or low degrees of not preferred flavors (acidic, bitter and astringent) and strong fine flavors and aromas (sweet, almond, fresh fruit, brown fruit, spice and floral). The three experts graded cocoa beans with 8 of 10 possible points.

The comparison with the traditional heap fermentation (comparative treatment 6) which is regularly performed in African cocoa forests demonstrated the significant sensory benefits for cocoa beans obtained in Example H. Cocoa beans of comparative example 6 generally expressed stronger intensities of not preferred flavors, whereas the fine flavors were hardly or not perceived by the experts. The cocoa beans of the comparative example expressed at least twice as high levels of bitterness and astringency, whereas no fine flavors (except for slight brown fruit flavor) were noticed in the cocoa beans by the experts. The three experts assessed for the cocoa beans obtained in control treatment 6 half the points graded for cocoa beans of Example D, i.e. less than medium preference.

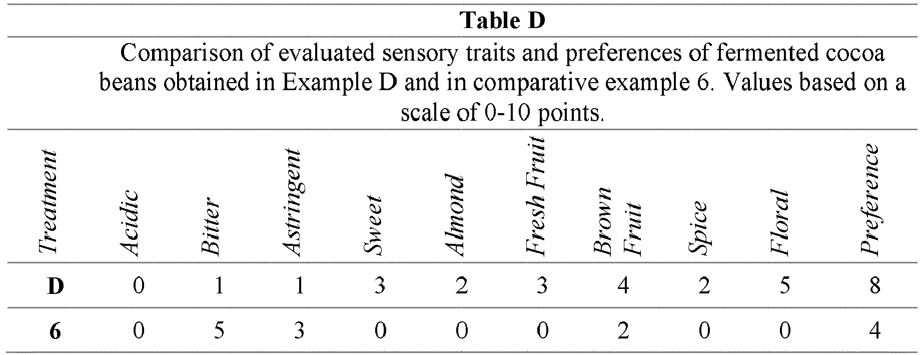

**Example** E - **Perforation of the fresh mixture, draining andinoculation.** Cocoa beans of the cocoa varieties"BN34"(*Treatment E1*),and"Amelonado Maranhão", "Amelonado Para" and "Amelonado Parazinho"(*Treatment E2*)were subjected to pod storage for 3 days (about 72 hours), followed by the procedure as follows.

35 kg of a fresh mixture of cocoa beans and cocoa pulp were placed in a 20x30x30 cm polystyrene boxes exhibiting 2-5 % of openings in the bottom, based on the total surface of the bottom. The openings were circular-shaped with a diameter of 0.8 to 1.2 cm.

Prior to initiation of the draining step, the fresh mixture of cocoa beans and cocoa pulp was perforated with a wooden stick, obtaining a perforated fresh mixture of cocoa beans and cocoa pulp, wherein the diameter of each perforation was of the size of about 1.0 to 2.0 cm and the perforations were about 10 to 15 cm apart from each other. During the draining (about 20 hours) a weight loss of 11 weight-%, based on the total mass of fresh cocoa beans and cocoa pulp, was obtained.

The cocoa honey-based inoculant obtained from the draining step was added to the drained mixture in an amount of 6 and 4 weight-%, respectively, based on the total mass of the drained mixture.

The inoculated mixtures were then subjected to fermentation. The inoculated mixture was placed in a polystyrene box exhibiting 5% of openings in the bottom, based on the total surface of the bottom. The fermentation temperature of the fermentation mass was regularly monitored every 12 hours. The termination of fermentation was determined by the decrease of temperature of the fermentation mass of from approximately 43 °C to 37 °C (about 96 hours). Fermented cocoa beans were sun-dried for about 144 hours on top of a wooden surface. Evaluated sensory traits and preferences of the obtained cocoa beans are presented in Table E.

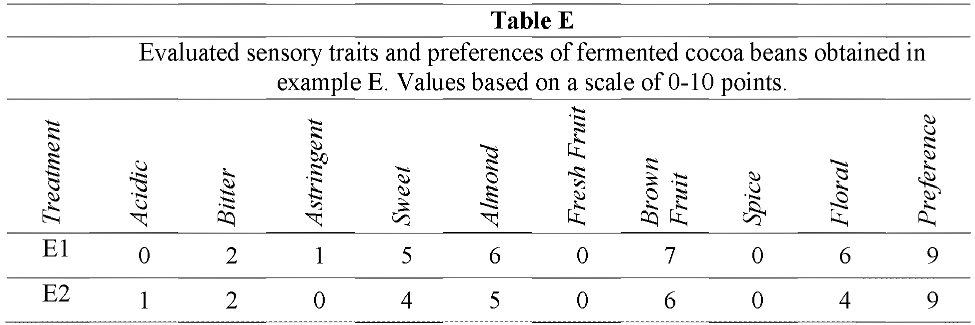

**Example F- Chocolate from drained and inoculated cocoa beans.** The fermented cocoa beans obtained in treatments E1 and E2 of Example E were processed to the chocolates F1 and F2, respectively, containing 70 % of cocoa mass and 30 % of sugar.

Fermented and dried cocoa beans obtained in treatments E1 and E2 of Example E were sterilized under reduced pressure (2.2 mbar) at 123 °C for 5 minutes. The sterile mixture was roasted in a Neuhaus roaster at 125 °C for 30 minutes and winnowed, wherein the obtained nibs were subsequently ground to cocoa liquor. Sweetened cocoa liquor was obtained by adding sugar of an amount of 35 weight-%, based on the total mass of cocoa liquor. Sweetened cocoa liquor was subjected to a conching process at 60 °C for about 22 hours, and the conched mass was successively tempered in accordance with the order of 45 °C, 28 °C and 32 °C. Chocolate was obtained in the form of a bar upon moulding of the tempered mass. Evaluated sensory traits and preferences of the obtained cocoa beans are presented in Table F.

The obtained chocolates expressed no acidity, astringency and no or negligibly bitterness(in contrast to the chocolate of comparative example 8 obtained from traditional fermentation according to comparative example 1) and the fine flavors and aromas sweet, cocoa, nutty and floral were perceived in a moderate degree (whereas the comparative chocolate according to comparative example 8 expressed very low fine flavors). The fine flavor fresh fruit was not perceived, whereas the brown fruit flavor was considerably intense. The three experts graded each chocolate obtained according to the present invention with 9 points out of 10 and therefore higher than traditionally obtained chocolate (7 points).

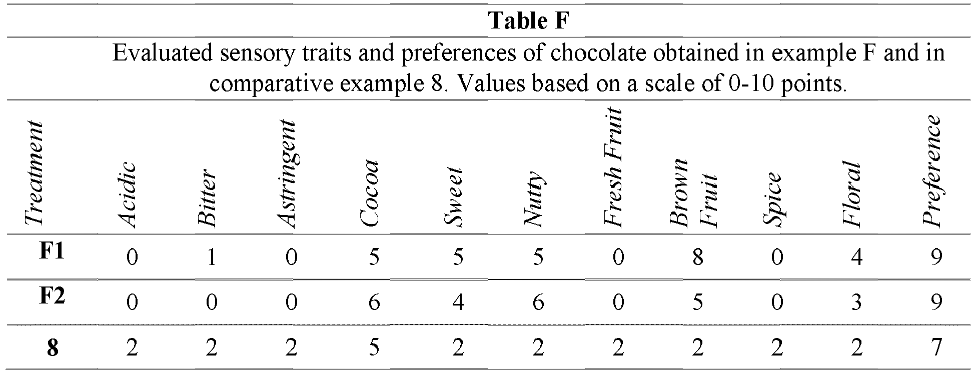

**Example G** - **Addition of aromatic substance.** As described below, cocoa beans consisting of three (3) different cocoa varieties ("Amelonado Maranhão", "Amelonado Para" and "Amelonado Parazinho") were subjected to no addition of aromatic substances *(Treatment G1*), addition of *Syzgiumaromaticum*(clove) and *Cinnamonumverum* (cinnamon) (*Treatment G2*) and to addition of *Annona muricata* (soursop, "graviola" or "guanabana") and *Theobroma grandiflorum* (cupuaçu) (*Treatment G3*) according to the following treatments.

***General procedure.*** 16 kg of a fresh mixture of cocoa beans and cocoa pulp were placed in a 25x20x30 cm polystyrene box exhibiting 2-5 % of openings in the bottom, based on the total surface of the bottom. The openings were circular-shaped with a diameter of 0.8 to 1.2 cm. The fresh mixture of cocoa beans and cocoa pulp mixture was perforated with a wooden stick, obtaining a perforated fresh mixture, wherein the diameter of each perforation was of the size of about 1.0 to 2.0 cm and the perforations were about 10 to 12 cm apart from each other.Thereafter, the perforated fresh mixture was drained for about 18 hours resulting in a weight loss of 8 to 12 weight-%, based on the total weight of the fresh mixture of cocoa beans and cocoa pulp.

A distinct amount of at least one aromatic substance was blended together with the cocoa honey-based inoculant.

The cocoa honey-based inoculant comprising no (*Treatment G1*) or at least one aromatic substance (*TreatmentsG2 and G3*) was added to the drained mixture in an amount of 4.0 weight-%, based on the total mass of the drained mixture.

***Treatment G1* - *Perforation of the fresh mixture, draining, inoculation, perforation of the inoculated mixture at the initiation of and during the fermentation.*** The inoculated mixture was perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 42 °C to 39 °C (about 96 hours).Fermented cocoa beans were sun-dried for about 192 hours on top of a wooden surface.

***Treatment G2* - *Perforation of the fresh mixture, draining, inoculant with clove and cinnamon, perforation of the inoculated mixture at the initiation of and during the fermentation.*** Triturated clove and cinnamon were added to the cocoa honey-based inoculant in an amount of 0.05 weight-% and 0.2 weight-%, respectively, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 42 °C to 39 °C (about 96 hours).Fermented cocoa beans were sun-dried for about 192 hours on top of a wooden surface.

***Treatment G3* - *Perforation of the fresh mixture, draining, inoculant with soursop and cupuaçu, perforation of the inoculated mixture at the initiation of and during the fermentation.*** Triturated soursop and cupuaçu were added to the cocoa honey-based inoculant in an amount of 2.5 weight-% and 2.5 weight-%, respectively, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 42 °C to 39 °C (about 96 hours).Fermented cocoa beans were sun-dried for about 192 hours on top of a wooden surface.

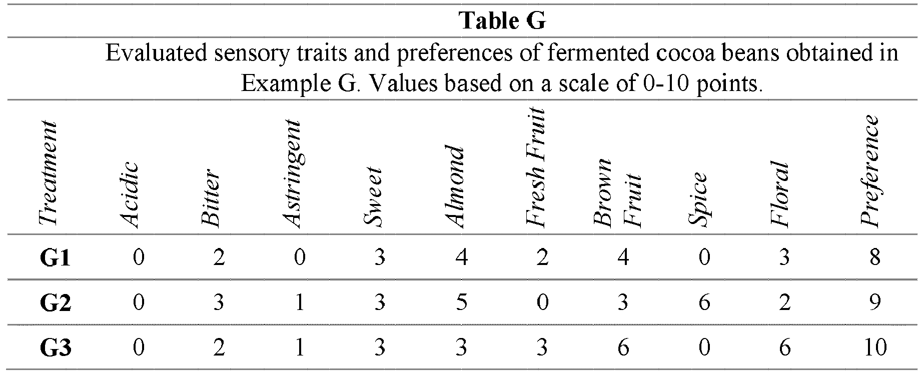

**Example H- Chocolate from drained, inoculated and aromatized cocoa beans.** The fermented cocoa beans obtained in treatments G1, G2 and G3 of Example G were processed to the chocolates, HI, H2 and H3, respectively, containing 70 % of cocoa mass and 30 % of sugar.

Fermented and dried cocoa beans obtained of the respective treatments were sterilized under reduced pressure (2.2 mbar) at 123 °C for 5 minutes. The sterile mixture was roasted in a Neuhaus roaster at 125 °C for 30 minutes and winnowed, wherein the obtained nibs were subsequently ground to cocoa liquor. Sweetened cocoa liquor was obtained by adding sugar of an amount of 35 weight-%, based on the total mass of cocoa liquor. Sweetened cocoa liquor was subjected to a conching process at 60 °C for about 22 hours, and the conched mass was successively tempered in accordance with the order of 45 °C, 28 °C and 32 °C. Chocolate was obtained in the form of a bar upon moulding of the tempered mass. Evaluated sensory traits and preferences of the obtained cocoa beans are presented in Table I.

Each chocolate obtained from unflavored or flavored fermented cocoa beans, expressed no acidity and the fine flavors and aromas sweet, cocoa, nutty and floral were perceived in a similarly moderate degree. The experts noticed generally stronger bitterness, astringency and particularly spicy aroma in chocolate obtained from cocoa beans flavored with clove + cinnamon. On the other hand, the fine flavors fresh fruit and brown fruit were considerably intensified upon addition of pulps of soursop and cupuaçu. The three experts graded flavored chocolates with the highest points possible, whereas unflavored chocolate was slightly less preferred.

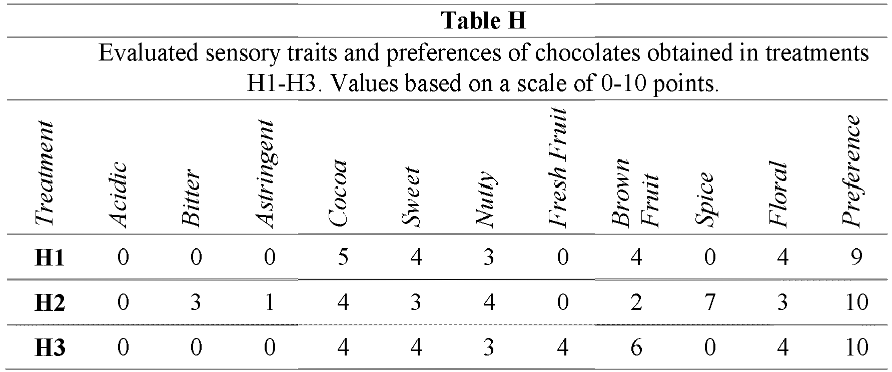

**Example I.** Cocoa beans of the cocoa variety mixture consisting of three (3) different cocoa varieties ("Amelonado Maranhão", "Amelonado Para" and "Amelonado Parazinho") were applied for treatmentsI1, 14 and 15. Cocoa beans of the cocoa variety "Amelonado Maranhão" were applied for treatment 12. Cocoa beans of the cocoa variety "Amelonado Para" were applied for treatment 13.

***General procedure.*** 16 kg of a fresh mixture of cocoa beans and cocoa pulp were placed in a 20x30x30 cm polystyrene box exhibiting 25 % of openings in the bottom, based on the total surface of the bottom. The openings were circular-shaped with a diameter of 0.8 to 1.2 cm. The fresh mixture of cocoa beans and cocoa pulp mixture was perforated with a wooden stick, obtaining a perforated fresh mixture, wherein the diameter of each perforation was of the size of about 1.0 to 2.0 cm and the perforations were about 10 to 15 cm apart from each other. Thereafter, the perforated fresh mixture was drained for about 18 hours resulting in a weight loss of 8 to 12 weight-%, based on the total weight of the fresh mixture of cocoa beans and cocoa pulp.

***Treatment I1* - *Perforation of the fresh mixture, draining, inoculation, perforation of the inoculated mixture at the initiation of and during fermentation.*** The cocoa honey-based inoculant was added to the drained mixture in an amount of 4.0 weight-%, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 40 °C to 35 °C (about 96 hours).Fermented cocoa beans were sun-dried for about 240 hours on top of a wooden surface.

***Treatment I2* - *Perforation of the fresh mixture, draining, inoculation, perforation of the inoculated mixture at the initiation of and during fermentation.*** The cocoa honey-based inoculant was added to the drained mixture in an amount of 4.0 weight-%, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 41 °C to 33 °C (about 96 hours).Fermented cocoa beans were sun-dried for about 216 hours on top of a wooden surface.

***Treatment I3- Perforation of the fresh mixture, draining, inoculation, perforation of the inoculated mixture at the initiation of and during fermentation, traditional fermentation box.*** The cocoa honey-based inoculant was added to the drained mixture in an amount of 4.0 weight-%, based on the total mass of the drained mixture.

The inoculated mixture was thereafter perforated with a wooden stick, obtaining a perforated inoculated mixture, wherein the diameter of each perforation was of the size of about 1.5 cm and the perforations were about 10 to 12 cm apart from each other. The perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 44 °C to 39 °C (about 96 hours).Fermented cocoa beans were sun-dried for about 192 hours on top of a wooden surface.

***Treatment I4- Perforation of the fresh mixture and draining.*** About 24 hours after initiation of the fermentation, the fermentation mass was turned and then perforated with a wooden stick, obtaining a perforated fermentation mass, wherein the diameter of each perforation was of the size of about 1.5 cm and the perforations were about 10 to 12 cm apart from each other. Then, the perforation step was iterated after every turning of the fermentation mass (24 hours). The fermentation was performed in the same polystyrene box as used in the draining step. The temperature of the fermentation mass was regularly monitored every 12 hours. The termination of fermentation was determined by the decrease of temperature of the fermentation mass of from approximately 39 °C to 34 °C (about 96 hours).Fermented cocoa beans were sun-dried for about 288 hours on top of a wooden surface.

***Treatment I5- Perforation of the fresh mixture, draining, inoculation, perforation of the inoculated mixture at the initiation of the fermentation.*** The cocoa honey-based inoculant was added to the drained mixture in an amount of 4.0 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step wasnot iterated after the first turning of the fermentation mass (24 hours). The temperature of the fermentation mass was regularly monitored every 12 hours. The termination of fermentation was determined by the decrease of temperature of the fermentation mass of from approximately 41 °C to 35 °C (about 96 hours).Fermented cocoa beans were sun-dried for about 168 to 360 hours on top of a wooden surface.

Evaluated sensory traits and preferences of the obtained cocoa beans are presented in Table I.

The results of evaluations by three sensory experts show that the lowest quality score of 5 is obtained with the control treatment that was not inoculated and which bean mass was neither perforated before nor after inoculation (see comparative example 10.1). The average of the treatments with all fermentation steps was 9.7 on a 10-point scale which is nearly 5 preference points showing the outstanding quality that can be obtained with the complete fermentation package, i.e. inoculation and vertical ventilation before and after inoculation. The second best treatments 14 and 15 both scored 9 preference points demonstrating that good quality can be obtained also by something less than the complete fermentation package. Treatment 10.2 which included only inoculation is with 7 preference points intermediate between the most and least preferred treatments. It shows a significant effect of the inoculation that was confirmed in some other experiments were inoculation alone resulted in preferences of 8-9.

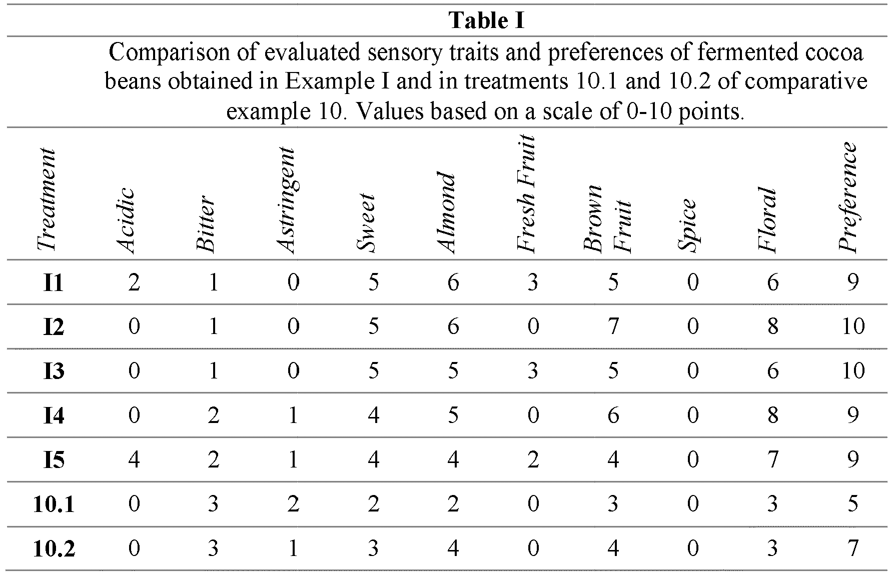

**Example J - Pod storage, addition of aromatic substance.** Cocoa pods of the cocoa variety mixture ("Amelonado Maranhão", "Amelonado Para" and "Amelonado Parazinho") were subjected to pod storage for 4 days (about 96 hours), followed by the general procedure as follows.

In order to vary and/or enhance the pleasant flavors in cocoa beans obtained in this invention, the inventor utilized three (3) kinds of aromatic pulp, Annona muricata (soursop, "graviola" or "guanabana") together with Theobroma grandiflorum (cupuaçu) (treatment J3), Artocarpus heterophyllus(Jackfruit) (treatment J1), one (1) kind of aromatic leaf, Coriandrum sativum (cilantro) (treatment J2), one (1) kind of aromatic flower bud, Syzgium aromaticum (clove), and one kind of aromatic bark, Cinnamonum verum (cinnamon) (treatment J4), involvingsix (6) different plant species.

***General procedure.*** 16 kg of a fresh mixture of cocoa beans and cocoa pulp were placed in a 20x30x30 cm polystyrene box exhibiting 25 % of openings in the bottom, based on the total surface of the bottom. The openings were circular-shaped with a diameter of 0.8 to 1.2 cm. The fresh mixture of cocoa beans and cocoa pulp mixture was perforated with a wooden stick, obtaining a perforated fresh mixture, wherein the diameter of each perforation was of the size of about 1.0 to 2.0 cm and the perforations were about 10 to 12 cm apart from each other. Thereafter, the perforated fresh mixture was drained for about 18 hours resulting in a weight loss of 8 to 12 weight-%, based on the total weight of the fresh mixture of cocoa beans and cocoa pulp.

A distinct amount of at least one aromatic substance was blended together with the cocoa honey-based inoculant.

The cocoa honey-based inoculant comprising at least one aromatic substance was added to the drained mixture in an amount of 4.0 weight-%, based on the total mass of the drained mixture.

***Treatment J1* - *Pod storage, perforation of the fresh mixture, draining, inoculant with Jackfruit, perforation of the inoculated mixture at the initiation of the fermentation.*** Triturated Jackfruit was added to the cocoa honey-based inoculant in an amount of 5 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was not iterated after the first turning of the fermentation mass (24 hours). The temperature of the fermentation mass was regularly monitored every 12 hours. The inventors terminated the fermentation after about 84 hours when the temperature of fermentation mass dropped from approximately 42 °C to 37 °C. Fermented cocoa beans were sun-dried for about 288 hours on top of a wooden surface.

***Treatment J2- Pod storage, perforation of the fresh mixture, draining, inoculant with cilantro, perforation of the inoculated mixture at the initiation of the fermentation.*** Triturated cilantro was added to the cocoa honey-based inoculant in an amount of 0.3 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was not iterated after the first turning of the fermentation mass (24 hours). The temperature of the fermentation mass was regularly monitored every 12 hours. The inventors terminated the fermentation after about 84 hours when the temperature of fermentation mass dropped from approximately 42 °C to 37 °C. Fermented cocoa beans were sun-dried for about 288 hours on top of a wooden surface.

***Treatment J3- Pod storage, perforation of the fresh mixture, draining, inoculant with soursop and cupuaçu, perforation of the inoculated mixture at the initiation of and during fermentation.*** Triturated soursop and cupuaçu were simultaneously added to the cocoa honey-based inoculant in an amount of 2.5 weight-% and 2.5 weight-%, respectively, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 44 °C to 39 °C. Fermented cocoa beans were sun-dried for about 288 hours on top of a wooden surface.

***Treatment J4- Pod storage, perforation of the fresh mixture, draining, inoculant with glove and cinnamon, perforation of the inoculated mixture at the initiation of and during fermentation.*** Triturated glove and cinnamon were simultaneously added to the cocoa honey-based inoculant in an amount of 0.04 weight-% and 0.2 weight-%, respectively, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 40 °C to 35 °C. Fermented cocoa beans were sun-dried for about 288 hours on top of a wooden surface.

Evaluated sensory traits and preferences of the obtained cocoa beans are presented in Table J.

The evaluation of the experts showed high preference for all the flavoring treatments with scores of 9 and 10. These results confirm that the claimed method is well suited for carrying out flavorings with different aromatic substances including fruit pulps and spices.

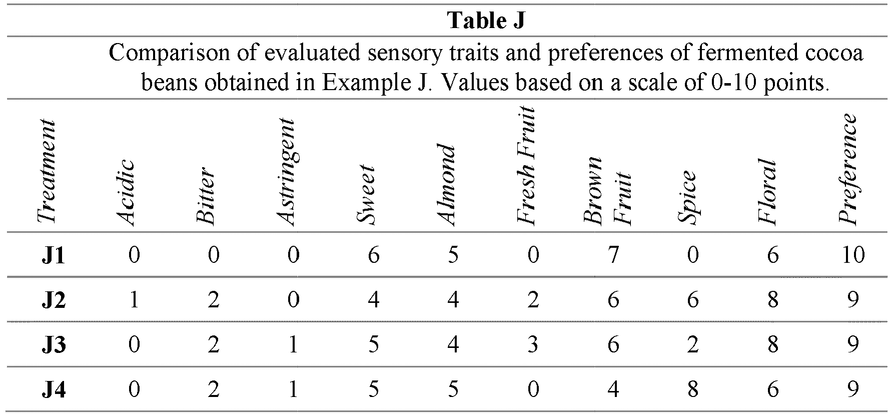

**Example K - Pod storage, variation of inoculum concentration.** Cocoa pods of the cocoa variety "Amelonado Maranhão" were subjected to pod storage for 3 days (72 hours) and cocoa beans thereof were applied for treatments K1, to K3. Cocoa pods of the cocoa variety "Amelonado Parazinho" were subjected to no pod storage and were applied for treatments K4 to K6.

***General procedure.*** 16 kg of a fresh mixture of cocoa beans and cocoa pulp were placed in a 30x50x30 cm polystyrene box exhibiting 2 to 5 % of openings in the bottom, based on the total surface the bottom. The openings were circular-shaped with a diameter of 0.8 to 1.2 cm. The fresh mixture of cocoa beans and cocoa pulp mixture was perforated with a wooden stick, obtaining a perforated fresh mixture, wherein the diameter of each perforation was of the size of about 1.0 to 2.0 cm and the perforations were about 10 to 12 cm apart from each other. Thereafter, the perforated fresh mixture was drained for about 18 hours resulting in a weight loss of 8 to 12 weight-%, based on the total weight of the fresh mixture of cocoa beans and cocoa pulp.

***Treatment K1- Pod storage, perforation of the fresh mixture, draining, 0 wt% inoculant, perforation of the drained mixture at the initiation of and during fermentation.*** The cocoa honey-based inoculant was added to the drained mixture in an amount of 0 weight-%, based on the total mass of the drained mixture. The drained mixture was thus not inoculated.

The drained mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 40 °C to 35 °C. Fermented cocoa beans were sun-dried for about 288 hours on top of a wooden surface.

***Treatment K2- Pod storage, perforation of the fresh mixture, draining, 2 wt% inoculant, perforation of the inoculated mixture at the initiation of and during fermentation.*** The cocoa honey-based inoculant was added to the drained mixture in an amount of 2 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 44 °C to 39 °C. Fermented cocoa beans were sun-dried for about 288 hours on top of a wooden surface.

***Treatment K3- Pod storage, perforation of the fresh mixture, draining, 4 wt% inoculant, perforation of the inoculated mixture at the initiation of and during fermentation.*** The cocoa honey-based inoculant was added to the drained mixture in an amount of 4 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 42 °C to 39 °C. Fermented cocoa beans were sun-dried for about 288 hours on top of a wooden surface.

***Treatment K4* - *Perforation of the fresh mixture, draining, 2 wt% inoculant, perforation of the inoculated mixture at the initiation of and during fermentation.*** The cocoa honey-based inoculant was added to the drained mixture in an amount of 2 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 42 °C to 39 °C. Fermented cocoa beans were sun-dried for about 288 hours on top of a wooden surface.

***Treatment K5- Perforation of the fresh mixture, draining, 4 wt% inoculant, perforation of the inoculated mixture at the initiation of and during fermentation.*** The cocoa honey-based inoculant was added to the drained mixture in an amount of 4 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 42 °C to 39 °C. Fermented cocoa beans were sun-dried for about 288 hours on top of a wooden surface.

***Treatment K6- Perforation of the fresh mixture, draining, 6 wt% inoculant, perforation of the inoculated mixture at the initiation of and during fermentation.*** The cocoa honey-based inoculant was added to the drained mixture in an amount of 6 weight-%, based on the total mass of the drained mixture.

The inoculated mixture was thereafter perforated with a wooden stick, obtaining a perforated fermentation mass, wherein the diameter of each perforation was of the size of about 1.5 cm and the perforations were about 10 to 12 cm apart from each other. The perforation step was iterated after every turning of the fermentation mass (24 hours). The temperature of the fermentation mass was regularly monitored every 12 hours. The inventors terminated the fermentation after about 84 hours when the temperature of fermentation mass dropped from approximately 42 °C to 39 °C. Fermented cocoa beans were sun-dried for about 288 hours on top of a wooden surface.

Evaluated sensory traits and preferences of the obtained cocoa beans are presented in Table K.

The results show that the concentration of the cocoa honey-based inoculant has a moderately positive effect on the sensory quality of the fermented and dried cocoa beans with an increase of one (1) or two (2) preference points detected by the sensory experts.

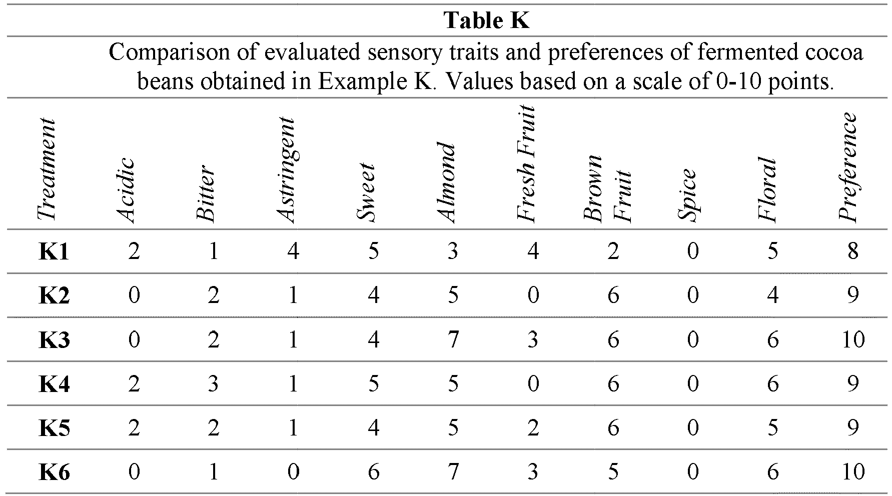

### EMBODIMENTS

The present disclosure also pertains to the following numbered items.
1. A method for processing cocoa beans comprising the steps of:
   (i) providing at least one cocoa pod;
   (ii) separating cocoa beans and cocoa pulp from the at least one cocoa pod, thereby providing a fresh mixture of cocoa beans and cocoa pulp;
   (iii) draining off cocoa honey from the fresh mixture of cocoa beans and cocoa pulp, the step including a perforation of the fresh mixture prior to, at the initiation and/or during draining, thereby providing a drained mixture;
   (iv) optionally inoculating the drained mixture with a cocoa honey-based inoculant, thereby providing an optionally inoculated mixture;
   (v) fermenting the drained mixture or, if step (iv) is present, the optionally inoculated mixture in a permeable fermentation container exhibiting openings at least in the bottom, the step optionally including a perforation of the drained mixture, or if step (iv) is present, the optionally inoculated mixture prior to, at the initiation and/or during fermentation, thereby providing fermented cocoa beans; and
   (vi) drying and/or roasting the fermented cocoa beans.
2. The method according to item 1, wherein the at least one cocoa pod is opened manually or mechanically 0 to 96 hours, 24 to 168 hours, 96 to 168 hours or 168 to 360 hours after step (i), preferably 0 to 6 hours, 6 to 12 hours, 12 to 24 hours, 48 to 63 hours, 24 to 96 hours, 90 to 96 hours, 96 to 162 hours, 162 to 168 hours, or 168 to 174 hours after step (i).
3. The method according to items 1 and 2, wherein the cocoa pulp of the fresh mixture is fully maintained or partially removed after step (ii), and wherein the cocoa pulp is partially removed in an amount of from 1 to 99 weight-%, or of an amount of from 5 to 95 weight-%, or of an amount of from 10 to 90 weight-%, or of an amount of from 20 to 80 weight-%, or of an amount of from 30 to 70 weight-%, or of an amount of from 40 to 60 weight-%, based on the total mass of cocoa pulp present in the fresh mixture.
4. The method according to any one of items 1 to 3, wherein the method further comprises a partial drying step of the fresh mixture of cocoa beans and cocoa pulp prior to step (iii) and after step (ii), and/or, if step (iv) is present, a partial drying step of the drained mixture prior to step (iv) and after step (iii), and/or, if step (iv) is absent, a partial drying step of the drained mixture prior to step (v) and after step (iii), thereby providing a partially dried mixture, and preferably wherein the drained mixture is partially dried prior to step (iv) and after step (iii).
5. The method according to item 4, wherein during the partial drying step, the fresh mixture of cocoa beans and cocoa pulp and/or the drained mixture is spread, thereby increasing the surface of the mixture and allowing the mixture to be exposed to air, preferably in the sun, partial shade and/or shade.
6. The method according to any one of items 4 and 5, wherein during the partial drying step a weight reduction of an amount of from 5 to 50 weight-% is obtained, preferably of an amount of from 5 to 10 weight-%, or of an amount of from 10 to 20 weight-%, or of an amount of from 20 to 30 weight-%, based on the total mass of the fresh mixture, and/or wherein the partial drying is performed over a period of from 0 to 20 hours, preferably over a period of from 1 to 2 hours, 2 to 3 hours, 3 to 4 hours, 4 to 5 hours, or 5 to 6 hours.
7. The method according to any one of items 1 to 6, wherein during the draining step (iii) a weight reduction of an amount of from 5 to 40 weight-% is obtained, preferably of an amount of from 5 to 8 weight-%, or of an amount of from 6 to 8 weight-%, or of an amount of from 8 to 9 weight-%, or of an amount of from 8 to 12 weight-%, or of an amount of from 9 to 11 weight-%, or of an amount of from 11 to 13 weight-%, or of an amount of from 13 to 15 weight-%, or of an amount of from 16 to 19 weight-%, based on the total mass of the fresh mixture of cocoa beans and cocoa pulp, and/or wherein the draining is performed over a period of from 10 to 30 hours, preferably over a period of from 14 to 16 hours, or 16 to 18 hours, or 18 to 20 hours, or 20 to 24 hours.
8. The method according to any one of items 1 to 7, wherein the fresh mixture of cocoa beans and cocoa pulp is perforated prior to, at the initiation of and/or during step (iii) at least once by sticking a rod into the fresh mixture of cocoa beans and cocoa pulp and thereafter removing the rod, and wherein preferably the perforation is iterated at regular intervals of about 24 hours.
9. The method according to any one of items 1 to 8, wherein, if step (iv) is present, the inoculated mixture is perforated prior to, at the initiation of and/or during step (v) at least once by sticking a rod into the inoculated mixture and thereafter removing the rod, and wherein preferably the perforation is iterated at regular intervals of about 24 hours.
10. The method according to any one of items 1 to 9 wherein the fresh mixture of cocoa beans and cocoa pulp in step (iii) are drained off in a container, wherein the container exhibits openings in the bottom, wherein the openings in the bottom comprise 1 to 30 %, preferably 1 to 2 %, 2 to 3 %, 3%, 2 to 5 %, 5%, 3 to 4 %, 4 to 8 %, 8 to 12 %, 12 to 16 %, 16 to 20 %, 20 to 24 %, 24 to 25 %, 25%, 25 to 26 %, or 26 to 30 %, based on the total surface of the bottom.
11. The method according to items 8 to 10, wherein the rod is a cylindrical rod, and wherein the cylindrical rod exhibits a diameter of from 0.5 to 5.0 cm, preferably from 0.5 to 1.5 cm, 1.0 to 2.0 cm, 1.5 to 2.5 cm, 2.0 to 3.0 cm, 2.5 to 3.5 cm, 3.0 cm to 4 cm, 3.5 cm to 4.5 cm, or 4.0 cm to 5.0 cm, and wherein preferably the cylindrical rod is a wooden stick.
12. The method according to any one of items 1 to 11, wherein, if step (iv) is present, the cocoa honey-based inoculant is cocoa honey and optionally comprises a natural leaf of at least one plant for fermentation of cocoa beans, preferably wherein the cocoa honey is obtained during step (iii), and preferably wherein the plant is selected from the group consisting of *Musa acuminata, Musa balbisiana, Theobroma cacao,* any hybrids and polyploids thereof, more preferably wherein the cocoa honey-based inoculant is cocoa honey obtained during step (iii).
13. The method according to item12, wherein the cocoa honey-based inoculant contains at least one microorganism, preferably wherein the microorganism comprises at least one species of yeast, at least one species of lactic acid bacteria and/or at least one species of acetic acid bacteria, and wherein preferably the microorganism is selected from the group consisting of *Hanseniaspora guilliermondii, Pichia kudriavzevii, Kluyveromyces marxianus, Saccharomyces cerevisiae, Lactobacillus plantarum, Lactobacillus lactis, Lactobacillus fermentum, Acetobacter pasteurianus* and *Gluconabacter frateurii.*
14. The method according to any one of items 12and 13, wherein the cocoa honey-based inoculant comprises a natural leaf and is a suspension comprising or consisting of 5 to 80 grams of triturated natural leaf pieces, preferably comprising or consisting of 10 to 30 grams of triturated natural leaf pieces, per liter of cocoa honey.
15. The method according to any one of items 12to 14, wherein the cocoa honey-based inoculant is present in step (iv) in an amount of from 0.1 to 10 weight-%, in an amount of from 0.1 to 5 weight-%, in an amount of from 0.2 to 3 weight-%, or in an amount of from 1 to 3 weight-%, or in an amount of from 0.5 to 1.5 weight-%, or in an amount of 1 weight-%, 2 weight-%, 4 weight-%, or 6 weight-%, based on the total mass of the drained mixture.
16. The method according to any one of items 1 to 15, wherein the termination of step (v) is determined by a decrease of the temperature of the inoculated mixture by 1 to 20 °C, 1 to 15 °C, 1 to 10 °C, 1 to 5 °C, 16 to 17 °C, 15 to 16 °C, 12 to 13 °C, 11 to 12 °C, 9 to 10 °C, 8 to 9 °C, 7 to 8 °C, 6 to 7 °C, 5 to 6 °C, 4 to 5 °C, 3 to 4 °C, or 1 to 3 °C.
17. The method according to any one of items 1 to 16, wherein the termination of step (v) is mainly determined by a sensory evaluation of the inoculated mixture characterized by low and/or no acidity, bitterness and/or astringency.
18. The method according to any one of items 1 to 17, wherein during step (v) the inoculated mixture is turned at least once, preferably at regular intervals of about 24 hours.
19. The method according to any one of items 1 to 18,wherein the permeable fermentation container in step (v) exhibits openings in the bottom, wherein the openings in the bottom comprise 1 to 30 %, preferably 1 to 2 %, 2 to 3 %, 3%, 2 to 5 %, 5%, 3 to 4 %, 4 to 8 %, 8 to 12 %, 12 to 16 %, 16 to 20 %, 20 to 24 %, 24 to 25 %, 25%, 25 to 26 %, or 26 to 30 %, based on the total surface of the bottom.
20. The method according to item19, wherein the permeable fermentation container further exhibits openings in the lateral walls, wherein the openings in the lateral walls comprise 1 to 30 %, preferably 1 to 2 %, 2 to 3 %, 3 to 4 %, 4 to 8 %, 8 to 12 %, 12 to 16 %, 16 to 20 %, 20 to 24 %, 24 to 25 %, 25 to 26 %, or 26 to 30 %, based on the total surface of the lateral walls.
21. The method according to items 19and 20, wherein the inner lateral wall of the permeable fermentation container is covered with at least one natural leaf prior to step (v), preferably wherein the at least one natural leaf is removed or replaced by at least one natural leaf after a turning of the inoculated mixture during step (v), preferably after the first, second, third, fourth or fifth turning of the inoculated mixture, preferably wherein the openings in the lateral walls comprise 5 % or more, based on the total surface of the lateral walls, and preferably wherein the natural leaf is provided by a plant selected from the group consisting of *Musa acuminata, Musa balbisiana,* any hybrids and polyploids thereof.
22. The method according to any one of items 1 to 21, wherein at least one part of the surface area of the permeable fermentation container is covered by a natural leaf during step (iii) and/or step (v), wherein the at least one part of surface area is at least part of the bottom and/or lateral wall of the permeable fermentation container, wherein preferably the natural leaf is provided by a plant selected from the group consisting of *Musa acuminata, Musa balbisiana* any hybrids and polyploids thereof, and preferably wherein the permeable fermentation container covered by a natural leaf is placed on the ground under tree canopies of any type of tree growing in the specific farm regions.
23. The method according to any one of items 1 to 22, wherein, if step (iv) is present, at least a part of the inoculated mixture and/or, at least a part of the fresh mixture of cocoa beans and cocoa pulp is provided with a permeable cover during step (v) and/or step (iii), wherein preferably the permeable cover is selected from the group consisting of cotton, jute and nylon.
24. The method according to any one of items 1 to 23, wherein at least one aromatic substance is added before, at the initiation, during, at the end or after step (v) and/or, if step (iv) is present, step (iv), and/or step (vi).
25. The method according to item24, wherein the aromatic substance is mixed with the cocoa honey-based inoculant before step (iv), and/or mixed the cocoa honey-based inoculant and/or water before, at the initiation, during, at the end or after step (v) and/or step (vi).
26. The method according to item24 or25, wherein the aromatic substance is present in an amount of from 0.005 to 25 weight-%, or is present in an amount of from 1 to 15 weight-%, or is present in an amount of from 1 to 10 weight-%, or is present in an amount of from 1 to 5 weight-%, or is present in an amount of from 0.01 to 2.5 weight-%, or is present in an amount of from 0.005 to 0.010 weight-%, or is present in an amount of from 0.005 to 0.015 weight-%, or is present in an amount of from 0.005 to 0.025 weight-%, or is present in an amount of 0.04 weight-%, 0.05 weight-%, 0.2 weight-%, 0.3 weight-%, 0.24 weight-%, 0.25 weight-%, 2.5 weight-%, or 5 weight-%, based on the total mass of the inoculated mixture, of the fermented cocoa beans and/or of the drying/dried fermented cocoa beans.
27. The method according to any one of items 1 to 26, wherein step (v) is performed in any rotating device, preferably wherein the rotating device is a rotating drum, and wherein the inoculated mixture is not subjected to perforation in step (v).
28. The method according to any one of items 1 to 27, wherein the method is characterized by a high repeatability and a high consistency with regard to the sensory quality of the fermented cocoa beans.
29. Cocoa beans, obtained or obtainable by the method according to any one of items 1 to 28.
30. Cocoa beans according to item 29, wherein 80-100 % of the cocoa beans express very low or no acidity, bitterness and/or astringency.
31. Cocoa beans according to any one of items 29or30, wherein 90-100 % of the cocoa beans express moderate to high sweet and almond flavors.
32. Cocoa beans according to any one of items 29 to 31, wherein the cocoa beans are characterized by strong expression of varietal fruity flavors and/or spicy/floral aromas.
33. Cocoa beans according to any one of items 29 to 32, wherein the cocoa beans display additional foreign flavors and/or aromas from added aromatic substances.
34. Cocoa beans according to any one of items 29to 33, wherein the cocoa beans are characterized by total absence of slaty beans.
35. Cocoa beans according to any one of items 29 to 34, wherein the cocoa beans are characterized by the presence of 90-100 % of cotyledons displaying apertures.
36. Cocoa beans according to any one of items 29to 35, wherein the cocoa beans are characterized by fine-flavor sensory traits independently from the variety being considered "bulk" or "fine-flavor" by prior art considerations.
37. Product comprising at least one cocoa bean or a part of a cocoa bean according to any one of item 29to 36.
38. A product according to item 37, wherein the product does not need to be alkalized, thus maintaining higher amounts of antioxidants in the cocoa products as compared to cocoa products obtained by traditional processing methods.
39. A product according to any one of item 37or38, wherein the product is selected from a semi-finished or finished product of the cocoa industry, comprising cocoa liquor, chocolate, cocoa powder, cocoa butter, cocoa nibs or cocoa-based products as health promoting products.
40. Process for preparing chocolate and/or cocoa product from cocoa beans of any one of items 29to 39, comprising the steps of
   a. Roasting, cracking and winnowing of the cocoa beans to remove shells, thereby obtaining cocoa nibs;
   b. Grinding of the cocoa nibs, thereby obtaining cocoa liquor;
   c1. Conching of the cocoa liquor to make chocolate; or
   c2. Pressing of the cocoa liquor to extract cocoa butter, thereby obtaining a cocoa cake; and
   d. Pulverizing of the cocoa cake, thereby obtaining cocoa powder.
41. A process according to item 40, wherein the cocoa nibs, the cocoa liquor, the cocoa cake and/or the cocoa powder is mixed with at least one further ingredient comprising sweetener, cocoa butter, milk powder and/or aromatic substances.
42. Chocolate and/or cocoa product manufactured according to any one of item40or41, wherein the chocolate and/or cocoa product displays low or no acidity, bitterness nor astringency, expressive sweet, caramel and almond flavors as well as expressive varietal fruity flavors and/or floral and/or spicy aromas.
43. A chocolate and/or cocoa product according to item42, wherein the chocolate and/or cocoa product is characterized by a long pleasant aftertaste.

## Claims

1. A method for processing cocoa beans comprising the steps of:
(i) providing at least one cocoa pod;
(ii) separating cocoa beans and cocoa pulp from the at least one cocoa pod, thereby providing a fresh mixture of cocoa beans and cocoa pulp;
(iii) draining off cocoa honey from the fresh mixture of cocoa beans and cocoa pulp, the step including a perforation of the fresh mixture prior to, at the initiation and/or during draining, thereby providing a drained mixture;
(iv) optionally inoculating the drained mixture with a cocoa honey-based inoculant, thereby providing an optionally inoculated mixture;
(v) fermenting the drained mixture or, if step (iv) is present, the optionally inoculated mixture in a permeable fermentation container exhibiting openings at least in the bottom, the step optionally including a perforation of the drained mixture, or if step (iv) is present, the optionally inoculated mixture prior to, at the initiation and/or during fermentation, thereby providing fermented cocoa beans; and
(vi) drying and/or roasting the fermented cocoa beans.

2. The method according to claim 1, wherein the at least one cocoa pod is opened manually or mechanically 0 to 96 hours, 24 to 168 hours, 96 to 168 hours or 168 to 360 hours after step (i), preferably 0 to 6 hours, 6 to 12 hours, 12 to 24 hours, 48 to 63 hours, 24 to 96 hours, 90 to 96 hours, 96 to 162 hours, 162 to 168 hours, or 168 to 174 hours after step (i).

3. The method according to claim 1 or 2, wherein the cocoa pulp of the fresh mixture is fully maintained or partially removed after step (ii), and wherein the cocoa pulp is partially removed in an amount of from 1 to 99 weight-%, or of an amount of from 5 to 95 weight-%, or of an amount of from 10 to 90 weight-%, or of an amount of from 20 to 80 weight-%, or of an amount of from 30 to 70 weight-%, or of an amount of from 40 to 60 weight-%, based on the total mass of cocoa pulp present in the fresh mixture.

4. The method according to any one of claims 1 to 3, wherein the fresh mixture of cocoa beans and cocoa pulp is perforated prior to, at the initiation of and/or during step (iii) at least once by sticking a rod into the fresh mixture of cocoa beans and cocoa pulp and thereafter removing the rod, and wherein preferably the perforation is iterated at regular intervals of about 24 hours.

5. The method according to any one of claims 1 to 4, wherein, if step (iv) is present, the cocoa honey-based inoculant is cocoa honey and optionally comprises a natural leaf of at least one plant for fermentation of cocoa beans, preferably wherein the cocoa honey is obtained during step (iii), and preferably wherein the plant is selected from the group consisting of *Musa acuminata, Musa balbisiana, Theobroma cacao,* any hybrids and polyploids thereof, more preferably wherein the cocoa honey-based inoculant is cocoa honey obtained during step (iii).

6. The method according to any one of claims 1 to 5, wherein the cocoa honey-based inoculant contains at least one microorganism, preferably wherein the microorganism comprises at least one species of yeast, at least one species of lactic acid bacteria and/or at least one species of acetic acid bacteria, and wherein preferably the microorganism is selected from the group consisting of *Hanseniaspora guilliermondii, Pichia kudriavzevii, Kluyveromyces marxianus, Saccharomyces cerevisiae, Lactobacillus plantarum, Lactobacillus lactis, Lactobacillus fermentum, Acetobacter pasteurianus* and *Gluconabacter frateurii.*

7. The method according to any one of claims 1 to 6, wherein the termination of step (v) is determined by a decrease of the temperature of the inoculated mixture by 1 to 20 °C, 1 to 15 °C, 1 to 10°C, 1 to 5 °C, 16 to 17 °C, 15 to 16 °C, 12 to 13 °C, 11 to 12 °C, 9 to 10 °C, 8 to 9 °C, 7 to 8 °C, 6 to 7 °C, 5 to 6 °C, 4 to 5 °C, 3 to 4 °C, or 1 to 3 °C, and/or by a strong decrease in acidity, bitterness and astringency of the inoculated mixture.

8. The method according to any one of claims 1 to 7, wherein the permeable fermentation container in step (v) exhibits openings in the bottom, wherein the openings in the bottom comprise 1 to 30 %, preferably 1 to 2 %, 2 to 3 %, 3 to 4 %, 4 to 8 %, 8 to 12 %, 12 to 16 %, 16 to 20 %, 20 to 24 %, 24 to 25 %, 25 to 26 %, or 26 to 30 %, based on the total surface of the bottom.

9. The method according to any one of items 1 to 8, wherein at least one aromatic substance is added before, at the initiation, during, at the end or after step (v) and/or, if step (iv) is present, step (iv), and/or step (vi).

10. Cocoa beans, obtained or obtainable by the method according to any one of claims 1 to 9.

11. Cocoa beans according to claim 10, wherein 80-100 % of the cocoa beans express very low or no acidity, bitterness and/or astringency.

12. Cocoa beans according to any one of claim 10 or 11, wherein the cocoa beans are **characterized by** the presence of 90-100 % of cotyledons displaying apertures.

13. Product comprising at least one cocoa bean or a part of a cocoa bean according to any one of claims 10 to 12.

14. The product according to claim 13, wherein the product is selected from a semi-finished or finished product of the cocoa industry, comprising cocoa liquor, chocolate, cocoa powder, cocoa butter, cocoa nibs or cocoa-based products as health promoting products.

15. Process for preparing chocolate and/or cocoa product from cocoa beans of any one of claims 10 to 14, comprising the steps of
a. Roasting, cracking and winnowing of the cocoa beans to remove shells, thereby obtaining cocoa nibs;
b. Grinding of the cocoa nibs, thereby obtaining cocoa liquor;
c1. Conching of the cocoa liquor to make chocolate; or
c2. Pressing of the cocoa liquor to extract cocoa butter, thereby obtaining a cocoa cake; and
d. Pulverizing of the cocoa cake, thereby obtaining cocoa powder.
